(19) **Europäisches Patentamt / European Patent Office / Office européen des brevets**

(11) **EP 4 668 981 A1**

(12) **EUROPEAN PATENT APPLICATION**
published in accordance with Art. 153(4) EPC

(43) Date of publication:
**24.12.2025 Bulletin 2025/52**

(21) Application number: 24757098.9

(22) Date of filing: **06.02.2024**

(51) International Patent Classification (IPC):
*H04W 72/232* (2023.01)     *H04W 72/21* (2023.01)
*H04W 72/04* (2023.01)     *H04L 5/00* (2006.01)
*H04B 7/06* (2006.01)

(52) Cooperative Patent Classification (CPC):
H04B 7/06; H04L 5/00; H04W 72/04; H04W 72/21;
H04W 72/232

(86) International application number:
**PCT/KR2024/001687**

(87) International publication number:
**WO 2024/172369 (22.08.2024 Gazette 2024/34)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **14.02.2023 KR 20230019589**

(71) Applicant: **LG Electronics Inc.**
**Yeongdeungpo-gu**
**Seoul 07336 (KR)**

(72) Inventors:
• **CHUNG, Jaehoon**
  **Seoul 06772 (KR)**
• **KANG, Jiwon**
  **Seoul 06772 (KR)**
• **KIM, Hyungtae**
  **Seoul 06772 (KR)**

(74) Representative: **Mooser, Sebastian Thomas**
**Wuesthoff & Wuesthoff**
**Patentanwälte und Rechtsanwalt PartG mbB**
**Schweigerstraße 2**
**81541 München (DE)**

(54) **METHOD AND DEVICE FOR SIGNAL TRANSMISSION AND RECEPTION IN WIRELESS COMMUNICATION SYSTEM**

(57)     (EN) A method for a terminal to receive signals in a wireless communication system according to at least one of embodiments disclosed in the present specification may include: receiving information about one or more component carrier (CC) lists for configuring one or more CC groups; receiving, on a first CC, downlink control information (DCI) including transmission configuration indication (TCI) information; and simultaneously updating at least one TCI state for each of CCs belonging to a first CC group and identical to the first CC, on the basis of the TCI information included in the DCI, wherein the association between values for the TCI information and TCI states to be applied to the CCs of the first CC group may be configured through network signaling.

**FIG. 17**

**Description**

**TECHNICAL FIELD**

The present disclosure relates to a wireless communication system, and more particularly, to a method and apparatus for transmitting or receiving a downlink/uplink radio signal in a wireless communication system.

**BACKGROUND**

Generally, a wireless communication system is developing to diversely cover a wide range to provide such a communication service as an audio communication service, a data communication service and the like. The wireless communication is a sort of a multiple access system capable of supporting communications with multiple users by sharing available system resources (e.g., bandwidth, transmit power, etc.). For example, the multiple access system may be any of a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

**DISCLOSURE**

**TECHNICAL PROBLEM**

The objective of the present disclosure is to provide a method and apparatus for efficiently performing a wireless signal transmission and reception process.
Other objectives may be inferred from the detailed description.

**TECHNICAL SOLUTION**

In an aspect of the present disclosure, provided herein is a method of receiving signals by a user equipment (UE) in a wireless communication system. The method includes: receiving information regarding one or more component carrier (CC) lists for configuring one or more CC groups; receiving downlink control information (DCI) including transmission configuration indication (TCI) information in a first CC; and simultaneously updating at least one TCI state for each of CCs belonging to a same first CC group as the first CC based on the TCI information included in the DCI. Association between values for the TCI information and TCI states to be applied to the CCs of the first CC group may be configured through network signaling.
Based on that the TCI information in the DCI is set as a first value for updating a j-th TCI state, the UE may update the j-th TCI state indicated for each CC of the first CC group to a TCI state associated with the first value.
The TCI state associated with the first value may be configured independently for each CC.
For the first CC, TCI state 'A' configured for the first CC may be associated with the first value, and for a second CC of the first CC group, TCI state 'B' configured for the second CC may be associated with the first value. The TCI state 'A' and the TCI state 'B' may be different from each other.
All CCs of the first CC group may be activated simultaneously through the network signaling.
The updated at least one TCI state may be either a joint TCI state for both downlink and uplink or separate TCI states for downlink and uplink, respectively.
A number of downlink TCI states (M1) and a number of uplink TCI states (N1) indicated for the first CC may be independent of a number of downlink TCI states (M2) and a number of uplink TCI states (N2) indicated for the second CC of the CC group.
The UE may receive information explicitly indicating the association between the values for the TCI information and the TCI states to be applied to the CCs of the first CC group through the network signaling.
The values for the TCI information may be codepoints of a TCI field included in the DCI.
In another aspect of the present disclosure, provided herein is a processor-readable recording medium having recorded thereon a program for performing the aforementioned signal reception.
In another aspect of the present disclosure, provided herein is a UE configured to perform performs the aforementioned signal reception.
In another aspect of the present disclosure, provided herein is a signal processing device configured to control the UE that performs the aforementioned signal reception.
In another aspect of the present disclosure, provided herein is a method of transmitting signals by a network node in a wireless communication system. The method includes: transmitting information regarding one or more CC lists for configuring one or more CC groups to a UE; transmitting DCI including TC) information to the UE on a first CC; and

simultaneously updating at least one TCI state for each of CCs belonging to a same first CC group as the first CC based on the TCI information included in the DCI. Association between values for the TCI information and TCI states to be applied to the CCs of the first CC group may be configured through network signaling provided to the UE by the network node.

In a further aspect of the present disclosure, provided herein is a network node configured to perform the aforementioned signal transmission.

## ADVANTAGEOUS EFFECTS

According to the present disclosure, wireless signal transmission and reception may be efficiently performed in a wireless communication system.

Other technical effects may be inferred from the detailed description.

## BRIEF DESCRIPTION OF THE DRAWINGS

FIG. 1 illustrates physical channels used in a 3rd generation partnership project (3GPP) system as an exemplary wireless communication system, and a general signal transmission method using the same.

FIG. 2 illustrates a radio frame structure.

FIG. 3 illustrates a resource grid of a slot.

FIG. 4 illustrates exemplary mapping of physical channels in a slot.

FIG. 5 illustrates an exemplary PDSCH and acknowledgment/negative acknowledgment (ACK/NACK) transmission process.

FIG. 6 illustrates an exemplary PUSCH transmission process.

FIG. 7 illustrates an example of a channel state information (CSI) related procedure.

FIG. 8 is a diagram for explaining the concept of a unified transmission configuration indication (TCI) framework.

FIG. 9 is a diagram for explaining determination, maintenance, and/or update of indicated TCI state(s) in a wireless communication system supporting a unified TCI framework according to an embodiment.

FIGS. 10 and 11 are diagrams for explaining TCI state association within a component carrier (CC) group for simultaneous TCI update.

FIG. 12 is a diagram for explaining operations of a network and a user equipment (UE) in a wireless communication system according to an embodiment.

FIG. 13 is a diagram for explaining network signaling for TCI state association within a CC group according to an embodiment.

FIG. 14 shows an example of TCI state association based on network signaling according to an embodiment.

FIGS. 15 and 16 are diagrams for explaining a TCI state identifier (ID) and TCI configuration configured for each CC.

FIG. 17 is a diagram for explaining operations of a UE according to an embodiment.

FIG. 18 is a diagram for explaining operations of a network node according to an embodiment.

FIGS. 19 to 22 illustrate a communication system 1 and wireless devices applicable to the present disclosure.

FIG. 23 illustrates a discontinuous reception (DRX) operation applicable to the present disclosure.

## DETAILED DESCRIPTION

Embodiments of the present disclosure are applicable to a variety of wireless access technologies such as code division multiple access (CDMA), frequency division multiple access (FDMA), time division multiple access (TDMA), orthogonal frequency division multiple access (OFDMA), and single carrier frequency division multiple access (SC-FDMA). CDMA can be implemented as a radio technology such as Universal Terrestrial Radio Access (UTRA) or CDMA2000. TDMA can be implemented as a radio technology such as Global System for Mobile communications (GSM)/General Packet Radio Service (GPRS)/Enhanced Data Rates for GSM Evolution (EDGE). OFDMA can be implemented as a radio technology such as Institute of Electrical and Electronics Engineers (IEEE) 802.11 (Wireless Fidelity (Wi-Fi)), IEEE 802.16 (Worldwide interoperability for Microwave Access (WiMAX)), IEEE 802.20, and Evolved UTRA (E-UTRA). UTRA is a part of Universal Mobile Telecommunications System (UMTS). 3rd Generation Partnership Project (3GPP) Long Term Evolution (LTE) is part of Evolved UMTS (E-UMTS) using E-UTRA, and LTE-Advanced (A) is an evolved version of 3GPP LTE. 3GPP NR (New Radio or New Radio Access Technology) is an evolved version of 3GPP LTE/LTE-A.

As more and more communication devices require a larger communication capacity, there is a need for mobile broadband communication enhanced over conventional radio access technology (RAT). In addition, massive Machine Type Communications (MTC) capable of providing a variety of services anywhere and anytime by connecting multiple devices and objects is another important issue to be considered for next generation communications. Communication system design considering services/UEs sensitive to reliability and latency is also under discussion. As such, introduction of new radio access technology considering enhanced mobile broadband communication (eMBB), massive MTC, and Ultra-Reliable and Low Latency Communication (URLLC) is being discussed. In the present disclosure, for simplicity, this technology will be referred to as NR (New Radio or New RAT).

For the sake of clarity, 3GPP NR is mainly described, but the technical idea of the present disclosure is not limited thereto.

In the present disclosure, the term "set/setting" may be replaced with "configure/configuration", and both may be used interchangeably. Further, a conditional expression (e.g., "if", "in a case", or "when") may be replaced by "based on that" or "in a state/status". In addition, an operation or software/hardware (SW/HW) configuration of a user equipment (UE)/base station (BS) may be derived/understood based on satisfaction of a corresponding condition. When a process on a receiving (or transmitting) side may be derived/understood from a process on the transmitting (or receiving) side in signal transmission/reception between wireless communication devices (e.g., a BS and a UE), its description may be omitted. Signal determination/generation/encoding/transmission of the transmitting side, for example, may be understood as signal monitoring reception/decoding/determination of the receiving side. Further, when it is said that a UE performs (or does not perform) a specific operation, this may also be interpreted as that a BS expects/assumes (or does not expect/assume) that the UE performs the specific operation. When it is said that a BS performs (or does not perform) a specific operation, this may also be interpreted as that a UE expects/assumes (or does not expect/assume) that the BS performs the specific operation. In the following description, sections, embodiments, examples, options, methods, schemes, and so on are distinguished from each other and indexed, for convenience of description, which does not mean that each of them necessarily constitutes an independent invention or that each of them should be implemented only individually. Unless explicitly contradicting each other, it may be derived/understood that at least some of the sections, embodiments, examples, options, methods, schemes, and so on may be implemented in combination or may be omitted.

In a wireless communication system, a user equipment (UE) receives information through downlink (DL) from a base station (BS) and transmit information to the BS through uplink (UL). The information transmitted and received by the BS and the UE includes data and various control information and includes various physical channels according to type/usage of the information transmitted and received by the UE and the BS.

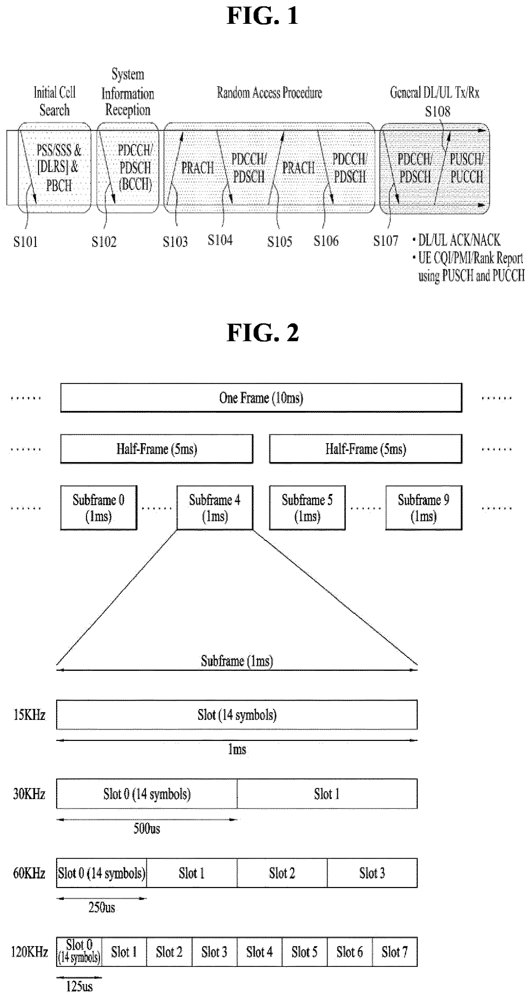

FIG. 1 illustrates physical channels used in a 3GPP NR system and a general signal transmission method using the same.

When a UE is powered on again from a power-off state or enters a new cell, the UE performs an initial cell search procedure, such as establishment of synchronization with a BS, in step S101. To this end, the UE receives a synchronization signal block (SSB) from the BS. The SSB includes a primary synchronization signal (PSS), a secondary synchronization signal (SSS), and a physical broadcast channel (PBCH). The UE establishes synchronization with the BS based on the PSS/SSS and acquires information such as a cell identity (ID). The UE may acquire broadcast information in a cell based on the PBCH. The UE may receive a DL reference signal (RS) in an initial cell search procedure to monitor a DL channel status.

After initial cell search, the UE may acquire more specific system information by receiving a physical downlink control channel (PDCCH) and receiving a physical downlink shared channel (PDSCH) based on information of the PDCCH in step S102.

The UE may perform a random access procedure to access the BS in steps S103 to S106. For random access, the UE may transmit a preamble to the BS on a physical random access channel (PRACH) (S103) and receive a response message for preamble on a PDCCH and a PDSCH corresponding to the PDCCH (S104). In the case of contention-based random access, the UE may perform a contention resolution procedure by further transmitting the PRACH (S105) and receiving a PDCCH and a PDSCH corresponding to the PDCCH (S106).

After the foregoing procedure, the UE may receive a PDCCH/PDSCH (S107) and transmit a physical uplink shared channel (PUSCH)/physical uplink control channel (PUCCH) (S108), as a general downlink/uplink signal transmission procedure. Control information transmitted from the UE to the BS is referred to as uplink control information (UCI). The UCI includes hybrid automatic repeat and request acknowledgement/negative-acknowledgement (HARQ-ACK/NACK), scheduling request (SR), channel state information (CSI), etc. The CSI includes a channel quality indicator (CQI), a precoding matrix indicator (PMI), a rank indicator (RI), etc. While the UCI is transmitted on a PUCCH in general, the UCI may be transmitted on a PUSCH when control information and traffic data need to be simultaneously transmitted. In addition, the UCI may be aperiodically transmitted through a PUSCH according to request/command of a network.

FIG. 2 illustrates a radio frame structure. In NR, uplink and downlink transmissions are configured with frames. Each radio frame has a length of 10 ms and is divided into two 5-ms half-frames (HF). Each half-frame is divided into five 1-ms subframes (SFs). A subframe is divided into one or more slots, and the number of slots in a subframe depends on subcarrier spacing (SCS). Each slot includes 12 or 14 Orthogonal Frequency Division Multiplexing (OFDM) symbols according to a cyclic prefix (CP). When a normal CP is used, each slot includes 14 OFDM symbols. When an extended CP is used, each slot includes 12 OFDM symbols.

Table 1 exemplarily shows that the number of symbols per slot, the number of slots per frame, and the number of slots per subframe vary according to the SCS when the normal CP is used.

[Table 1]

| SCS ($15*2^u$) | $N^{slot}_{symb}$ | $N^{frame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

$N^{slot}_{symb}$: Number of symbols in a slot
$N^{frame,u}_{slot}$: Number of slots in a frame
$N^{subframe,u}_{slot}$: Number of slots in a subframe

Table 2 illustrates that the number of symbols per slot, the number of slots per frame, and the number of slots per subframe vary according to the SCS when the extended CP is used.

[Table 2]

| SCS ($15*2^u$) | $N^{slot}_{symb}$ | $N^{frame,u}_{slot}$ | $N^{subframe,u}_{slot}$ |
|---|---|---|---|
| 60KHz (u=2) | 12 | 40 | 4 |

The structure of the frame is merely an example. The number of subframes, the number of slots, and the number of symbols in a frame may vary.

In the NR system, OFDM numerology (e.g., SCS) may be configured differently for a plurality of cells aggregated for one UE. Accordingly, the (absolute time) duration of a time resource (e.g., an SF, a slot or a TTI) (for simplicity, referred to as a time unit (TU)) consisting of the same number of symbols may be configured differently among the aggregated cells. Here, the symbols may include an OFDM symbol (or a CP-OFDM symbol) and an SC-FDMA symbol (or a discrete Fourier transform-spread-OFDM (DFT-s-OFDM) symbol).

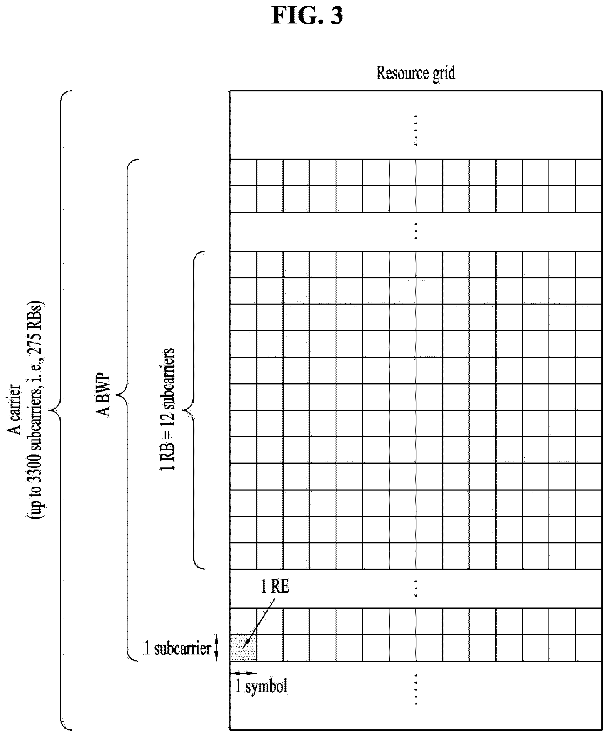

FIG. 3 illustrates a resource grid of a slot. A slot includes a plurality of symbols in the time domain. For example, when the normal CP is used, the slot includes 14 symbols. However, when the extended CP is used, the slot includes 12 symbols. A carrier includes a plurality of subcarriers in the frequency domain. A resource block (RB) is defined as a plurality of consecutive subcarriers (e.g., 12 consecutive subcarriers) in the frequency domain. A bandwidth part (BWP) may be defined to be a plurality of consecutive physical RBs (PRBs) in the frequency domain and correspond to a single numerology (e.g., SCS, CP length, etc.). The carrier may include up to N (e.g., 5) BWPs. Data communication may be performed through an activated BWP, and only one BWP may be activated for one UE. In the resource grid, each element is referred to as a resource element (RE), and one complex symbol may be mapped to each RE.

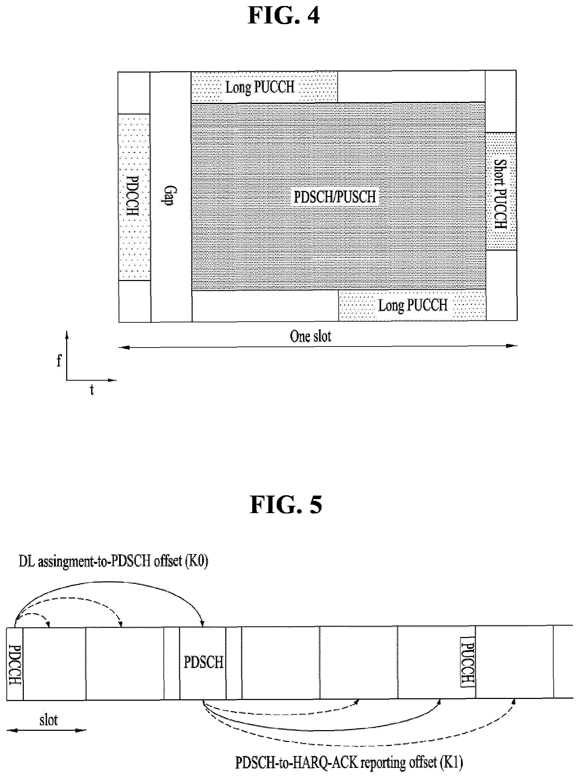

FIG. 4 illustrates exemplary mapping of physical channels in a slot. A PDCCH may be transmitted in a DL control region, and a PDSCH may be transmitted in a DL data region. A PUCCH may be transmitted in a UL control region, and a PUSCH may be transmitted in a UL data region. A guard period (GP) provides a time gap for transmission mode-to-reception mode switching or reception mode-to-transmission mode switching at a BS and a UE. Some symbol at the time of DL-to-UL switching in a subframe may be configured as a GP.

Each physical channel will be described below in greater detail.

The PDCCH delivers DCI. For example, the PDCCH (i.e., DCI) may carry information about a transport format and resource allocation of a DL shared channel (DL-SCH), resource allocation information of an uplink shared channel (UL-SCH), paging information on a paging channel (PCH), system information on the DL-SCH, information on resource allocation of a higher-layer control message such as an RAR transmitted on a PDSCH, a transmit power control command, information about activation/release of configured scheduling, and so on. The DCI includes a cyclic redundancy check (CRC). The CRC is masked with various identifiers (IDs) (e.g., a radio network temporary identifier (RNTI)) according to an owner or usage of the PDCCH. For example, if the PDCCH is for a specific UE, the CRC is masked by a UE ID (e.g., cell-RNTI (C-RNTI)). If the PDCCH is for a paging message, the CRC is masked by a paging-RNTI (P-RNTI). If the PDCCH is for system information (e.g., a system information block (SIB)), the CRC is masked by a system information RNTI (SI-RNTI). When the PDCCH is for an RAR, the CRC is masked by a random access-RNTI (RA-RNTI).

The PDCCH includes 1, 2, 4, 8, or 16 control channel elements (CCEs) according to its aggregation level (AL). A CCE is a logical allocation unit used to provide a PDCCH with a specific code rate according to a radio channel state. A CCE includes 6 resource element groups (REGs), each REG being defined by one OFDM symbol by one (P)RB. The PDCCH is transmitted in a control resource set (CORESET). A CORESET is defined as a set of REGs with a given numerology (e.g., an SCS, a CP length, and so on). A plurality of CORESETs for one UE may overlap with each other in the time/frequency domain. A CORESET may be configured by system information (e.g., a master information block (MIB)) or UE-specific higher-layer signaling (e.g., radio resource control (RRC) signaling). Specifically, the number of RBs and the number of symbols (3 at maximum) in the CORESET may be configured through higher-layer signaling.

For PDCCH reception/detection, the UE monitors PDCCH candidates. A PDCCH candidate is CCE(s) that the UE should monitor to detect a PDCCH. Each PDCCH candidate is defined as 1, 2, 4, 8, or 16 CCEs according to an AL. The monitoring includes (blind) decoding PDCCH candidates. A set of PDCCH candidates decoded by the UE are defined as a PDCCH search space (SS). An SS may be a common search space (CSS) or a UE-specific search space (USS). The UE may obtain DCI by monitoring PDCCH candidates in one or more SSs configured by an MIB or higher-layer signaling. Each CORESET is associated with one or more SSs, and each SS is associated with one CORESET. An SS may be defined based on the following parameters.

controlResourceSetId: A CORESET related to an SS.
monitoringSlotPeriodicityAndOffset: A PDCCH monitoring periodicity (in slots) and a PDCCH monitoring offset (in slots).
monitoringSymbolsWithinSlot: PDCCH monitoring symbols in a slot (e.g., the first symbol(s) of a CORESET).
nrofCandidates: The number of PDCCH candidates (one of 0, 1, 2, 3, 4, 5, 6, and 8) for each AL={1, 2, 4, 8, 16}.

An occasion (e.g., time/frequency resources) in which the UE is to monitor PDCCH candidates is defined as a PDCCH (monitoring) occasion. One or more PDCCH (monitoring) occasions may be configured in a slot.

Table 3 shows the characteristics of each SS.

[Table 3]

| Type | Search Space | RNTI | Use Case |
|---|---|---|---|
| Type0-PDCCH | Common | SI-RNTI on a primary cell | SIB Decoding |
| Type0A-PDCCH | Common | SI-RNTI on a primary cell | SIB Decoding |
| Type1-PDCCH | Common | RA-RNTI or TC-RNTI on a primary cell | Msg2, Msg4 decoding in RACH |
| Type2-PDCCH | Common | P-RNTI on a primary cell | Paging Decoding |
| Type3-PDCCH | Common | INT-RNTI, SFI-RNTI, TPC-PUSCH-RNTI, TPC-PUCCH-RNTI, TPC-SRS-RNTI, C-RNTI, MCS-C-RNTI, or CS-RNTI(s) | |
| UE Specific | UE Specific | C-RNTI, or MCS-C-RNTI, or CS-RNTI(s) | User specific PDSCH decoding |

Table 4 shows DCI formats transmitted on the PDCCH.

[Table 4]

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |

(continued)

| DCI format | Usage |
|---|---|
| 2_2 | Transmission of TPC commands for PUCCH and PUSCH |
| 2_3 | Transmission of a group of TPC commands for SRS transmissions by one or more UEs |

DCI format 0_0 may be used to schedule a TB-based (or TB-level) PUSCH, and DCI format 0_1 may be used to schedule a TB-based (or TB-level) PUSCH or a code block group (CBG)-based (or CBG-level) PUSCH. DCI format 1_0 may be used to schedule a TB-based (or TB-level) PDSCH, and DCI format 1_1 may be used to schedule a TB-based (or TB-level) PDSCH or a CBG-based (or CBG-level) PDSCH (DL grant DCI). DCI format 0_0/0_1 may be referred to as UL grant DCI or UL scheduling information, and DCI format 1_0/1_1 may be referred to as DL grant DCI or DL scheduling information. DCI format 2_0 is used to deliver dynamic slot format information (e.g., a dynamic slot format indicator (SFI)) to a UE, and DCI format 2_1 is used to deliver DL pre-emption information to a UE. DCI format 2_0 and/or DCI format 2_1 may be delivered to a corresponding group of UEs on a group common PDCCH which is a PDCCH directed to a group of UEs.

DCI format 0_0 and DCI format 1_0 may be referred to as fallback DCI formats, whereas DCI format 0_1 and DCI format 1_1 may be referred to as non-fallback DCI formats. In the fallback DCI formats, a DCI size/field configuration is maintained to be the same irrespective of a UE configuration. In contrast, the DCI size/field configuration varies depending on a UE configuration in the non-fallback DCI formats.

The PDSCH conveys DL data (e.g., DL-shared channel transport block (DL-SCH TB)) and uses a modulation scheme such as quadrature phase shift keying (QPSK), 16-ary quadrature amplitude modulation (16QAM), 64QAM, or 256QAM. A TB is encoded into a codeword. The PDSCH may deliver up to two codewords. Scrambling and modulation mapping may be performed on a codeword basis, and modulation symbols generated from each codeword may be mapped to one or more layers. Each layer together with a demodulation reference signal (DMRS) is mapped to resources, and an OFDM symbol signal is generated from the mapped layer with the DMRS and transmitted through a corresponding antenna port.

The PUCCH delivers uplink control information (UCI). The UCI includes the following information.

SR (Scheduling Request): Information used to request UL-SCH resources.

HARQ (Hybrid Automatic Repeat reQuest)-ACK (Acknowledgement): A response to a DL data packet (e.g., codeword) on the PDSCH. An HARQ-ACK indicates whether the DL data packet has been successfully received. In response to a single codeword, a 1-bit of HARQ-ACK may be transmitted. In response to two codewords, a 2-bit HARQ-ACK may be transmitted. The HARQ-ACK response includes positive ACK (simply, ACK), negative ACK (NACK), discontinuous transmission (DTX) or NACK/DTX. The term HARQ-ACK is interchangeably used with HARQ ACK/NACK and ACK/NACK.

CSI (Channel State Information): Feedback information for a DL channel. Multiple input multiple output (MIMO)-related feedback information includes an RI and a PMI.

Table 5 illustrates exemplary PUCCH formats. PUCCH formats may be divided into short PUCCHs (Formats 0 and 2) and long PUCCHs (Formats 1, 3, and 4) based on PUCCH transmission durations.

[Table 5]

| PUCCH format | Length in OFDM symbols $N_{\text{symb}}^{\text{PUCCH}}$ symb | Number of bits | Usage | Etc |
|---|---|---|---|---|
| 0 | 1 - 2 | $\leq 2$ | HARQ, SR | Sequence selection |
| 1 | 4 - 14 | $\leq 2$ | HARQ, [SR] | Sequence modulation |
| 2 | 1 - 2 | >2 | HARQ, CSI, [SR] | CP-OFDM |
| 3 | 4 - 14 | >2 | HARQ, CSI, [SR] | DFT-s-OFDM (no UE multiplexing) |
| 4 | 4 - 14 | >2 | HARQ, CSI, [SR] | DFT-s-OFDM (Pre DFT OCC) |

PUCCH format 0 conveys UCI of up to 2 bits and is mapped in a sequence-based manner, for transmission. Specifically, the UE transmits specific UCI to the BS by transmitting one of a plurality of sequences on a PUCCH of PUCCH format 0. Only when the UE transmits a positive SR, the UE transmits the PUCCH of PUCCH format 0 in PUCCH resources for a corresponding SR configuration.

PUCCH format 1 conveys UCI of up to 2 bits and modulation symbols of the UCI are spread with an orthogonal cover code (OCC) (which is configured differently whether frequency hopping is performed) in the time domain. The DMRS is transmitted in a symbol in which a modulation symbol is not transmitted (i.e., transmitted in time division multiplexing (TDM)).

PUCCH format 2 conveys UCI of more than 2 bits and modulation symbols of the DCI are transmitted in frequency division multiplexing (FDM) with the DMRS. The DMRS is located in symbols #1, #4, #7, and #10 of a given RB with a density of 1/3. A pseudo noise (PN) sequence is used for a DMRS sequence. For 2-symbol PUCCH format 2, frequency hopping may be activated.

PUCCH format 3 does not support UE multiplexing in the same PRBS, and conveys UCI of more than 2 bits. In other words, PUCCH resources of PUCCH format 3 do not include an OCC. Modulation symbols are transmitted in TDM with the DMRS.

PUCCH format 4 supports multiplexing of up to 4 UEs in the same PRBS, and conveys UCI of more than 2 bits. In other words, PUCCH resources of PUCCH format 3 include an OCC. Modulation symbols are transmitted in TDM with the DMRS.

At least one of one or two or more cells configured to the UE may be configured for PUCCH transmission. At least a primary cell may be set as a cell for the PUCCH transmission. At least one PUCCH cell group may be configured to the UE based on at least one cell where the PUCCH transmission is configured, and each PUCCH cell group includes one or two or more cells. A PUCCH cell group may be simply referred to as a PUCCH group. The PUCCH transmission may be configured not only in the primary cell but also in a secondary cell (Scell). The primary cell belongs to a primary PUCCH group, and the PUCCH-SCell where the PUCCH transmission is configured belongs to a secondary PUCCH group. For cells belonging to the primary PUCCH group, a PUCCH on the primary cell may be used. For cells belonging to the secondary PUCCH group, a PUCCH on the PUCCH-SCell may be used.

The PUSCH delivers UL data (e.g., UL-shared channel transport block (UL-SCH TB)) and/or UCI based on a CP-OFDM waveform or a DFT-s-OFDM waveform. When the PUSCH is transmitted in the DFT-s-OFDM waveform, the UE transmits the PUSCH by transform precoding. For example, when transform precoding is impossible (e.g., disabled), the UE may transmit the PUSCH in the CP-OFDM waveform, while when transform precoding is possible (e.g., enabled), the UE may transmit the PUSCH in the CP-OFDM or DFT-s-OFDM waveform. A PUSCH transmission may be dynamically scheduled by a UL grant in DCI, or semi-statically scheduled by higher-layer (e.g., RRC) signaling (and/or Layer 1 (L1) signaling such as a PDCCH) (configured scheduling or configured grant). The PUSCH transmission may be performed in a codebook-based or non-codebook-based manner.

FIG. 5 illustrates an exemplary ACK/NACK transmission process. Referring to FIG. 5, the UE may detect a PDCCH in slot #n. The PDCCH includes DL scheduling information (e.g., DCI format 1_0 or DCI format 1_1). The PDCCH indicates a DL assignment-to-PDSCH offset, K0 and a PDSCH-to-HARQ-ACK reporting offset, K1. For example, DCI format 1_0 and DCI format 1_1 may include the following information.

Frequency domain resource assignment: Indicates an RB set assigned to a PDSCH.

Time domain resource assignment: Indicates K0 and the starting position (e.g., OFDM symbol index) and length (e.g., the number of OFDM symbols) of the PDSCH in a slot

PDSCH-to-HARQ_feedback timing indicator: Indicates K1.

HARQ process number (4 bits): Indicates the HARQ process ID of data (e.g., a PDSCH or TB).

PUCCH resource indicator (PRI): Indicates a PUCCH resource to be used for UCI transmission among a plurality of PUCCH resources in a PUCCH resource set.

After receiving a PDSCH in slot #(n+K0) according to the scheduling information of slot #n, the UE may transmit UCI on a PUCCH in slot #(n+K1). The UCI may include an HARQ-ACK response to the PDSCH. FIG. 5 is based on the assumption that the SCS of the PDSCH is equal to the SCS of the PUCCH, and slot #n1=slot #(n+K0), for convenience, which should not be construed as limiting the present disclosure. When the SCSs are different, K1 may be indicated/interpreted based on the SCS of the PUCCH.

In the case where the PDSCH is configured to carry one TB at maximum, the HARQ-ACK response may be configured in one bit. In the case where the PDSCH is configured to carry up to two TBs, the HARQ-ACK response may be configured in two bits if spatial bundling is not configured and in one bit if spatial bundling is configured. When slot #(n+K1) is designated as an HARQ-ACK transmission timing for a plurality of PDSCHs, UCI transmitted in slot #(n+K1) includes HARQ-ACK responses to the plurality of PDSCHs.

Whether the UE should perform spatial bundling for an HARQ-ACK response may be configured for each cell group (e.g., by RRC/higher layer signaling). For example, spatial bundling may be configured for each individual HARQ-ACK response transmitted on the PUCCH and/or HARQ-ACK response transmitted on the PUSCH.

When up to two (or two or more) TBs (or codewords) may be received at one time (or schedulable by one DCI) in a corresponding serving cell (e.g., when a higher layer parameter *maxNrofCodeWordsScheduledByDCI* indicates 2 TBs), spatial bundling may be supported. More than four layers may be used for a 2-TB transmission, and up to four layers may be used for a 1-TB transmission. As a result, when spatial bundling is configured for a corresponding cell group, spatial bundling may be performed for a serving cell in which more than four layers may be scheduled among serving cells of the cell group. A UE which wants to transmit an HARQ-ACK response through spatial bundling may generate an HARQ-ACK response by performing a (bit-wise) logical AND operation on A/N bits for a plurality of TBs.

For example, on the assumption that the UE receives DCI scheduling two TBs and receives two TBs on a PDSCH based on the DCI, a UE that performs spatial bundling may generate a single A/N bit by a logical AND operation between a first A/N bit for a first TB and a second A/N bit for a second TB. As a result, when both the first TB and the second TB are ACKs, the UE reports an ACK bit value to a BS, and when at least one of the TBs is a NACK, the UE reports a NACK bit value to the BS.

For example, when only one TB is actually scheduled in a serving cell configured for reception of two TBs, the UE may generate a single A/N bit by performing a logical AND operation on an A/N bit for the one TB and a bit value of 1. As a result, the UE reports the A/N bit for the one TB to the BS.

There are plurality of parallel DL HARQ processes for DL transmissions at the BS/UE. The plurality of parallel HARQ processes enable continuous DL transmissions, while the BS is waiting for an HARQ feedback indicating successful or failed reception of a previous DL transmission. Each HARQ process is associated with an HARQ buffer in the medium access control (MAC) layer. Each DL HARQ process manages state variables such as the number of MAC physical data unit (PDU) transmissions, an HARQ feedback for a MAC PDU in a buffer, and a current redundancy version. Each HARQ process is identified by an HARQ process ID.

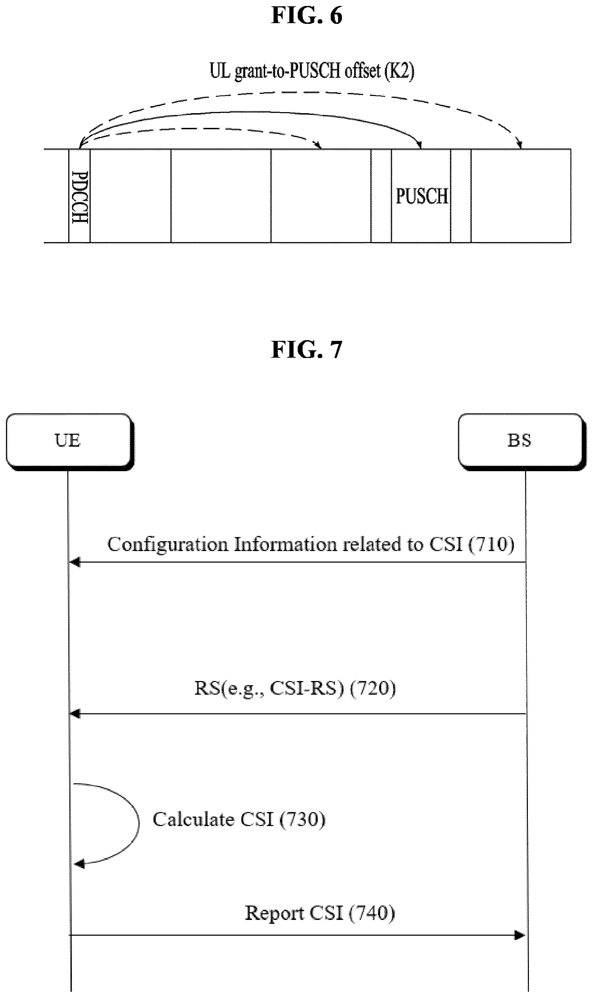

FIG. 6 illustrates an exemplary PUSCH transmission procedure. Referring to FIG. 6, the UE may detect a PDCCH in slot #n. The PDCCH includes DL scheduling information (e.g., DCI format 1_0 or 1_1). DCI format 1_0 or 1_1 may include the following information.

Frequency domain resource assignment: Indicates an RB set assigned to the PUSCH.

Time domain resource assignment: Indicates a slot offset K2 and the starting position (e.g., OFDM symbol index) and duration (e.g., the number of OFDM symbols) of the PUSCH in a slot. The starting symbol and length of the PUSCH may be indicated by a start and length indicator value (SLIV), or separately.

The UE may then transmit a PUSCH in slot #(n+K2) according to the scheduling information in slot #n. The PUSCH includes a UL-SCH TB.

CSI related operation

FIG. 7 shows an example of a CSI related procedure.

The UE receives configuration information related to CSI from the BS via RRC signaling (710). The CSI-related configuration information may include at least one of channel state information-interference measurement (CSI-IM)-related information, CSI measurement-related information, CSI resource configuration-related information, CSI-RS resource-related information, or CSI report configuration-related information.

- A CSI-IM resource may be configured for interference measurement (IM) of the UE. In the time domain, the CSI-IM resource set may be configured periodic, semi-persistent, or aperiodic. The CSI-IM resource may be configured to zero power (ZP)-CSI-RS for the UE. ZP-CSI-RS may be configured to be distinguished from non-zero power (NZP)-CSI-RS.

- The UE may assume that CSI-RS resource(s) for channel measurement configured for one CSI reporting and CSI-IM/NZP CSI-RS resource(s) for interference measurement have a QCL relationship with respect to 'QCL-TypeD' for each resource (when NZP CSI-RS resource(s) are used for interference measurement).

- CSI resource configuration may include at least one of a CSI-IM resource for interference measurement, an NZP CSI-RS resource for interference measurement, and an NZP CSI-RS resource for channel measurement. The channel measurement resource (CMR) may be a NZP CSI-RS for CSI acquisition, and the interference measurement resource (IMR) may be an NZP CSI-RS for CSI-IM and IM.

- A CSI-RS may be configured for one or more UEs. Different CSI-RS configurations may be provided for each UE, or the same CSI-RS configuration may be provided to a plurality of UEs. The CSI-RS may support up to 32 antenna ports. CSI-RSs corresponding to N (N being 1 or more) antenna ports may be mapped to N RE locations within a time-frequency unit corresponding to one slot and one RB. When N is 2 or more, N-port CSI-RSs may be multiplexed in CDM, FDM and/or TDM methods. The CSI-RS may be mapped to the remaining REs except for REs to which CORESET, DMRS, and SSB are mapped. In the frequency domain, the CSI-RS may be configured for the entire bandwidth, a partial bandwidth part (BWP), or a partial bandwidth. The CSI-RS may be transmitted in each RB within the bandwidth in which the CSI-RS is configured (i.e., density = 1), or the CSI-RS may be transmitted in every second RB (e.g., even or odd RB) (i.e., density = 1/2). When the CSI-RS is used as a tracking reference signal (TRS), a single-port CSI-RS may be mapped on three subcarriers in each resource block (i.e., density = 3). One or more CSI-RS resource sets may be configured for the UE in the time domain. Each CSI-RS resource set may include one or more CSI-RS configurations. Each CSI-RS resource set may be configured periodic, semi-persistent, or aperiodic.

- The CSI report configuration may include configuration for a feedback type, a measurement resource, a report type, and the like. The NZP-CSI-RS resource set may be used for CSI reporting configuration of a corresponding UE. An NZP-CSI-RS resource set may be associated with the CSI-RS or the SSB. A plurality of periodic NZP-CSI-RS resource sets may be configured as TRS resource sets. (i) The feedback types include a channel quality indicator (CQI), a precoding matrix indicator (PMI), a CSI-RS resource indicator (CRI), an SSB resource block indicator (SSBRI), a layer indicator (LI), a rank indicator (RI), a first layer (L1)-reference signal received strength (RSRP), and the like. (ii) The measurement resource may include configuration for a downlink signal and/or downlink resource on which measurement is performed by the UE to determine feedback information. The measurement resource may be configured as a ZP and/or NZP CSI-RS resource set associated with the CSI report configuration. The NZP CSI-RS resource set may include a CSI-RS set or an SSB set. For example, the L1-RSRP may be measured for a CSI-RS set or for an SSB set. (iii) The report type may include configuration for a time when the UE performs a report and an uplink channel. The reporting time may be configured to be periodic, semi-persistent or aperiodic. The periodic CSI report may be transmitted on a PUCCH. The semi-persistent CSI report may be transmitted on a PUCCH or a PUSCH based on a medium access control (MAC) control element (CE) indicating activation/deactivation. The aperiodic CSI report may be indicated by DCI signaling. For example, a CSI request field of an uplink grant may indicate one of various report trigger sizes. The aperiodic CSI report may be transmitted on a PUSCH.

The UE measures CSI based on configuration information related to CSI. The CSI measurement may include receiving the CSI-RS (720) and acquiring the CSI by computing the received CSI-RS (730).

The UE may transmit a CSI report to the BS (740). For the CSI report, the time and frequency resource available to the UE are controlled by the BS. Channel state information (CSI) includes at least one of a channel quality indicator (CQI), a precoding matrix indicator (PMI), a CSI-RS resource indicator (CRI), a SS/PBCH block resource indicator (SSBRI), a layer indicator (LI), a rank indicator (RI), an L1-RSRP, and/or an L-SINR.

A time domain behavior of CSI reporting supports periodic, semi-persistent, aperiodic. i) Periodic CSI reporting is performed in a short PUCCH, a long PUCCH. Periodicity and a slot offset of periodic CSI reporting may be configured by RRC and refers to a CSI-ReportConfig IE. ii) SP (semi-periodic) CSI reporting is performed in a short PUCCH, a long PUCCH, or a PUSCH. For SP CSI in a short/long PUCCH, periodicity and a slot offset are configured by RRC and a CSI report is activated/deactivated by separate MAC CE/DCI. For SP CSI in a PUSCH, periodicity of SP CSI reporting is configured by RRC, but a slot offset is not configured by RRC and SP CSI reporting is activated/deactivated by DCI (format 0_1). For SP CSI reporting in a PUSCH, a separated RNTI (SP-CSI C-RNTI) is used. An initial CSI report timing follows a PUSCH time domain allocation value indicated by DCI and a subsequent CSI report timing follows a periodicity configured by RRC. DCI format 0_1 may include a CSI request field and activate/deactivate a specific configured SP-CSI trigger state. SP CSI reporting has activation/deactivation equal or similar to a mechanism having data transmission in a SPS PUSCH. iii) Aperiodic CSI reporting is performed in a PUSCH and is triggered by DCI. In this case, information related to trigger of aperiodic CSI reporting may be delivered/indicated/configured through MAC-CE. For AP CSI having an AP CSI-RS, AP CSI-RS timing is configured by RRC and timing for AP CSI reporting is dynamically controlled by DCI.

Quasi-co location (QCL)

When the channel property of an antenna port is to be inferred from a channel of another antenna port, the two antenna ports are quasi co-located. The channel property may include one or more of delay spread, Doppler spread, frequency/Doppler shift, average received power, received Timing/average delay, and a spatial RX parameter.

For PDCCH/PDSCH QCL, the UE may be configured with multiple transmission configuration indication (TCI) states through higher layer signaling. For PDCCH QCL, up to 64 TCI states may be configured via RRC for PDCCH QCL, and for PDSCH QCL, up to 128 TCI states may be configured via RRC. In the case of PDSCH QCL, a list to configure multiple TCI states may be provided through a higher layer parameter PDSCH-Config.

Each TCI state is associated with QCL configuration parameters between one or two DL RSs and DM-RS ports of a PDSCH/PDCCH. The QCL configuration parameters may include qcl-Type1 for the first DL RS and qcl-Type2 for the second DL RS. The QCL type may correspond to one of the following:

- 'QCL-TypeA': {Doppler shift, Doppler spread, average delay, delay spread}
- 'QCL-TypeB': {Doppler shift, Doppler spread}
- 'QCL-TypeC': {Doppler shift, average delay}
- 'QCL-TypeD': {Spatial Rx parameter}

TCI states configured via RRC signaling are deactivated by default.

For PDSCH QCL, up to 8 TCI states among TCI states configured via RRC may be activated through a MAC CE. A TCI field included in DCI that schedules a PDSCH may indicate one of the activated TCI states (e.g., when the provision of the TCI field in the DCI is enabled by RRC signaling), and the UE may receive the PDSCH based on QCL information corresponding to the indicated TCI states.

For PDCCH QCL, one TCI state among TCI states configured via RRC may be activated for a related CORESET through a MAC CE. To receive a PDCCH in the corresponding CORESET, the UE may receive the PDCCH based on QCL information corresponding to the activated TCI state.

Operations related to multiple transmission and reception points (M-TRPs)

Multi-TRP (M-TRP) transmission, where M TRPs transmit data to a single UE, may be divided into two main types: eMBB M-TRP transmission, which aims to increase the transmission rate, and URLLC M-TRP transmission, which aims to improve the reception success rate and reduce the latency.

ADL M-TRP URLLC transmission method refers to a method where M-TRPs transmit the same data/DCI using different spatial (e.g., layer/port), time, or frequency resources. For example, TRP 1 may transmit specific data/DCI on resource 1, and TRP 2 may transmit the specific data/DCI (i.e., the same data/DCI) on resource 2.

In other words, when the DL M-TRP URLLC transmission method is configured, the UE may receive the same data/DCI using different spatial, time, or frequency resources. In this case, the UE may receive from the BS indications regarding a QCL RS/type (i.e., DL TCI state) to be used for the spatial, time, or frequency resources where the data/DCI is received.

For example, if the data/DCI is received on both resource 1 and resource 2, the UE may be provided by the BS with a DL TCI state used for resource 1 and a DL TCI state used for resource 2. By receiving the data/DCI on both resource 1 and resource 2, high reliability may be achieved. Such M-TRP URLLC transmission method may be applied to a PDSCH/PDCCH.

A UL M-TRP URLLC transmission method refers to a method where M-TRPs receive the same data/UCI from a single UE using different spatial, time, or frequency resources. For example, TRP 1 may receive the same data/UCI from the UE on resource 1, and TRP 2 may receive the same data/UCI from the UE on resource 2. Furthermore, TRP 1 and TRP 2 may share the data/UCI received from the UE through a backhaul link (connected between the TRPs).

In other words, when the UL M-TRP URLLC transmission method is configured, the UE may transmit the same data/UCI to each TRP using different spatial, time, or frequency resources. In this case, the UE may receive from the BS indications regarding a Tx beam and Tx power (i.e., UL TCI state) to be used on the spatial, time, or frequency resources where the same data/UCI is transmitted. For example, if the same data/UCI is transmitted on resource 1 and resource 2, the UE may be provided with a UL TCI state to be used for resource 1 and a UL TCI state to be used for resource 2 from the BS. The UL M-TRP URLLC transmission method may be applied to a PUSCH/PUCCH.

Additionally, from the perspective of DCI transmission, M-TRP transmission methods may be divided into: i) an M-TRP transmission method based on multiple pieces of DCI (multiple DCI or M-DCI), where each TRP transmits different DCI; and ii) an M-TRP transmission method based on a single piece of DCI (single DCI or S-DCI) where one TRP transmits DCI. For example, in the case of S-DCI, since all scheduling information on data transmitted by M-TRPs needs to be conveyed in a single piece of DCI, the method may be used in an ideal backhaul (BH) environment where dynamic cooperation between two TRPs is allowed.

Regarding M-TRP transmission and reception in the Rel-16 NR standardization, both the S-DCI based M-TRP transmission method and the M-DCI based M-TRP transmission method are supported for PDSCH transmission and reception

First, an S-DCI based M-TRP PDSCH transmission method will be described.

For S-DCI based M-TRP PDSCH transmission, one of the SDM, FDM, and/or TDM methods may be used. In the case of SDM, the BS transmits a single TB using multiple layers, but the BS transmits layers belonging to different DMRS CDM groups through different transmission beams (Tx beams) (i.e., QCL RSs or TCI states). This method may increase the number of layers compared to the conventional S-TRP transmission method, thereby improving the transmission capacity. In addition, when a single TB is transmitted using multiple layers, some layers may be transmitted to TRP 1 while the remaining layers are transmitted to TRP 2, which may enhance the channel reliability through diversity gain.

For FDM, two schemes: scheme 2a and scheme 2b are supported. In scheme 2a, a single TB is transmitted across multiple RBs, and RBs in different RB groups are transmitted using different Tx beams (i.e., QCL RSs or TCI states). In scheme 2b, the same TB is transmitted across different RB groups, and RBs in different RB groups are transmitted using different Tx beams (i.e., QCL RSs or TCI states). For TDM, two schemes: scheme 3 and scheme 4 are supported. In scheme 4 (i.e., inter-slot TDM), the same TB across is repeatedly transmitted across multiple slots, and slots in different slot groups are transmitted using different Tx beams (i.e., QCL RSs or TCI states). In scheme 3 (i.e., intra-slot TDM), the same TB is repeatedly transmitted across multiple OFDM symbol groups, and some OFDM symbol groups and the remaining OFDM symbol groups are transmitted using different Tx beams (i.e., QCL RSs or TCI states).

Next, an M-DCI based M-TRP PDSCH transmission method will be described.

In M-DCI based M-TRP PDSCH transmission, each TRP schedules and transmits a PDSCH through DCI. In other words, TRP 1 transmits PDSCH 1 through DCI 1, and TRP 2 transmits PDSCH 2 through DCI 2. When PDSCH 1 and PDSCH 2 overlap on the same frequency-time resources, two PDSCHs are received on the same RE, which leads to increases in the resource efficiency and transmission capacity. To this end, the concept of a CORESET pool, which refers to a group of multiple CORESETs, has been introduced. For example, TRP 1 transmits a PDCCH in a CORESET belonging to CORESET pool 0 and also transmits a PDSCH scheduled by the PDCCH. TRP 2 transmits a PDCCH in a CORESET belonging to CORESET pool 1 and also transmits a PDSCH scheduled by the PDCCH.

For a PUSCH, a specific TRP may schedule PUSCH transmission to the UE in a CORESET belonging to a CORESET pool. For example, some PUCCH resources may be scheduled by TRP 1, while the remaining PUCCH resources may be scheduled by TRP 2. The UE may transmit an independent PUSCH/PUCCH for each of TRP 1 and TRP 2.

The UE may recognize PUSCHs (or PUCCHs) scheduled by DCI received based on different CORESETs (or CORESETs belonging to different CORESET groups) as PUSCHs (or PUCCHs) to be transmitted to different TRPs or PUSCHs (or PUCCHs) for different TRPs. In addition, the method for UL transmission (e.g., PUSCH/PUCCH) to different TRPs may be equally applied to UL transmission to different panels belonging to the same TRP.

Herein, a CORESET group ID (or CORESET pool index, which has the same meaning) may refer to an index/identification information (e.g., ID) used to differentiate CORESETs for each TRP/panel. A CORESET group may refer to a group/union of CORESETs that are distinguished by the index/identification information (e.g., ID)/CORESET group ID used to differentiate CORESETs for each TRP/panel. For example, the CORESET group ID may be specific index information defined in a CORESET configuration. In other words, the CORESET group may be configured/indicated/defined by an index defined in the CORESET configuration for each CORESET. Additionally/alternatively, the CORESET group ID may refer to an index/identification information/indicator used to distinguish/identify CORESETs configured for/associated with each TRP/panel.

Herein, the CORESET group ID may be represented as a specific index/specific identification information/specific indicator used to distinguish/identify CORESETs configured for /associated with each TRP/panel. The corresponding information may be configured/indicated through higher layer signaling (e.g., RRC signaling, MAC-CE, etc.) and/or physical layer signaling (e.g., DCI). For example, it may be configured/instructed that PDCCH detection is performed on a per-CORESET group basis for each TRP/panel. It may be configured/instructed that UCI (e.g., CSI, HARQ-ACK/NACK, SR, etc.) and/or UL physical channel resources (e.g., PUCCH/PRACH/SRS resources) are managed/controlled separately on a per-CORESET group basis for each TRP/panel. Additionally/alternatively, a HARQ ACK/NACK (process/retransmission) for a PDSCH/PUSCH scheduled for each TRP/panel may be managed on a per-CORESET group basis.

For example, a higher layer parameter ControlResourceSet information element (IE) may include a CORESET-related ID (e.g., controlResourceSetID), a CORESET pool index for the CORESET (e.g., CORESETPoolIndex), a time/frequency resource configuration for the CORESET, TCI information related to the CORESET, and so on. For instance, the index of the CORESET pool (e.g., CORESETPoolIndex) may be set to 0 or 1. In the present disclosure, the CORESET group may correspond to the CORESET pool, and the CORESET group ID may correspond to the CORESET pool index (e.g., CORESETPoolIndex).

In relation to M-TRP transmission and reception in the Rel-17 NR standardization, M-TRP PDCCH/PDSCH single frequency network (SFN) transmission, S-DCI based M-TRP PUSCH repeated transmission, and single PUCCH resource based M-TRP PUCCH repeated transmission are supported. In these transmission methods, to enhance URLLC targets for increased reliability, the same content (i.e., DCI/ULTB/UCI, etc.) is repeatedly transmitted. In this case, M-TRP PDCCH repeated transmission is performed based on TDM or FDM, M-TRP PDCCH/PDSCH SFN transmission is performed on the same time/frequency/layer, S-DCI based M-TRP PUSCH repeated transmission is performed based on TDM, and single PUCCH resource based M-TRP PUCCH repeated transmission is performed based on TDM.

First, an S-DCI based M-TRP PDCCH repeated transmission method will be described.

In the NR Rel-17 standardization, to support the M-TRP PDCCH repeated transmission, the UE is configured with a plurality of CORESETs with different TCI states (i.e., different QCL RSs), along with a plurality of search space (SS) sets, which are respectively associated with the CORESETs. The BS may indicate/configure to the UE that the SS set associated with one CORESET is linked to the SS set associated with another CORESET for the purpose of repeated transmission. Accordingly, the UE may recognize that PDCCH candidates of the SS sets are being repeatedly transmitted.

For example, if the UE is configured with two CORESETs: CORESET 0 and CORESET 1, CORESET 0 and CORESET 1 are associated with SS set 0 and SS set 1, respectively, and SS set 0 and SS set 1 may be linked with each other. The UE may recognize that the same DCI is repeatedly transmitted on PDCCH candidates of SS set 0 and SS set 1. In addition, the UE may identify, based on specific rules, that a specific PDCCH candidate in SS set 0 and a specific PDCCH candidate in SS set 1 are paired to transmit the same DCI repeatedly. The two PDCCH candidates are referred to as linked PDCCH candidates, and the UE may successfully decode the DCI as long as the UE correctly receives either of the two PDCCH candidates. However, when the UE receives a PDCCH candidate in SS set 0, the UE may use a QCL RS (i.e., DL beam) of a TCI state in CORESET 0 associated with SS set 0. The UE may use a QCL RS (i.e., DL beam) of a TCI state in CORESET 1 associated with SS set 1 when receiving a PDCCH candidate in SS set 1. Thus, the UE may receive the linked PDCCH candidates using different beams.

Next, an M-TRP SFN PDCCH/PDSCH transmission method will be described.

As one form of the M-TRP PDCCH repeated transmission, M-TRPs may transmit the same DCI repeatedly over the same time/frequency/DMRS port, and such a transmission method may be referred to as SFN PDCCH transmission. However, for the SFN PDCCH transmission, instead of configuring a plurality of CORESETs with different TCI states, the BS configures a plurality of TCI states within a single CORESET. When the UE receives a PDCCH candidate through an SS set associated with the single CORESET, the UE may use all of the plurality of configured TCI states to perform channel estimation on a PDCCH DMRS and attempt decoding.

In the above-described M-TRP PDSCH repeated transmission, two TRPs transmit the channel repeatedly on different resources. However, if the resources used by the two TRPs are the same, that is, if the same channel is repeatedly transmitted over the same frequency/time/layer (i.e., DMRS port), the reliability of the channel may be improved. In this case, since the same channel, which is repeatedly transmitted, is not separated by different resources, the channel may be combined during transmission (i.e., in the air) and received as a single channel (e.g., a composite channel) from the perspective of the receiver (e.g., UE). For SFN PDSCH transmission, the UE may be configured with two DL TCI states to receive a PDSCH DMRS.

Next, an S-DCI based M-TRP PUSCH repeated transmission method will be described.

In the NR Rel-17 standardization, for S-DCI based M-TRP PUSCH transmission, the BS may configure two SRS sets for the UE. Each set is used to indicate a UL Tx port, UL beam/QCL information for TRP 1 and TRP 2. In addition, the BS may indicate SRS resources for each SRS resource set through two SRI fields included in a single piece of DCI and may also indicate up to two PC parameter sets. For example, the first SRI field may indicate an SRS resource and power control (PC) parameter set defined in SRS resource set 0, while the second SRI field may indicate an SRS resource and PC parameter set defined in SRS resource set 1. Through the first SRI field, the UE may be provided with the UL Tx port, PC parameter set, and UL beam/QCL information for TRP 1. Thereafter, the UE may perform PUSCH transmission on a TO corresponding to SRS resource set 0. Similarly, through the second SRI field, the UE may be provided with the UL Tx port, PC parameter set, and UL beam/QCL information for TRP 2. Thereafter, the UE may perform PUSCH transmission on a TO corresponding to SRS resource set 1. In addition to the SRI field, transmission precoding matrix indicator (TPMI), phase tracking reference signal (PTRS), and transmission power control (TPC) fields have been expanded from a single field to two fields to allow separate indications for each TRP. In addition, a 2-bit SRS resource set indication field is introduced. Thus, a specific SRS set may be selected from two SRS sets to perform single transmission/reception point (STRP) PUSCH repetition transmission, or the two sets may be selected to perform M-TRP PUSCH repetition transmission. Specifically, when the field is set to 00 or 01, it indicates SRS set 0 or SRS set 1, respectively, and STRP PUSCH transmission corresponding to each set is performed. When the field is set to 10, it indicates (SRS set 0, SRS set 1), and M-TRP PUSCH transmission is performed in the order of the indicated set pair. That is, set 0 corresponds to a first PUSCH transmission occasion (TO). When the field is set to 11, it indicates (SRS set 1, SRS set 0), and M-TRP PUSCH transmission is performed in the order of the indicated set pair. That is, set 1 corresponds to the first PUSCH TO.

Next, a single PUCCH resource based M-TRP PUCCH repeated transmission method will be described.

In the NR Rel-17 standardization, for single PUCCH resource based M-TRP PUCCH transmission, the BS may activate/configure two pieces of spatial relation information for a single PUCCH resource for the UE (in the case of FR1, two PC parameter sets may be activated/configured). When UL UCI is transmitted on the PUCCH resource, each piece of spatial relation information may be used to indicate to the UE the spatial relation information for TRP 1 and TRP 2, respectively. For example, through a value indicated by the first spatial relation information, the UE may be configured with a Tx beam/PC parameter(s) for TRP 1 and use the corresponding information to perform PUCCH transmission on a TO corresponding to TRP 1. Similarly, through a value indicated by the second spatial relation information, the UE may be configured with a Tx beam/PC parameter(s) for TRP 2 and use the corresponding information to perform PUCCH transmission on a TO corresponding to TRP 2.

Additionally, to support the M-TRP PUCCH repeated transmission, the configuration method has been enhanced to allow two pieces of spatial relation information to be configured for a PUCCH resource. That is, when PC parameters such as PLRS, Alpha, P0, and closed loop index are configured for each piece of spatial relation information, a spatial relation RS may be configured. As a result, PC information and spatial relation RS information corresponding to two TRPs may be configured by two pieces of spatial relation information. Accordingly, the UE transmits a UCI PUCCH (i.e., CSI, ACK/NACK, SR, etc.) using first spatial relation information at a first TO and transmits the same UCI PUCCH using second spatial relation information at a second TO. In the present disclosure, a PUCCH resource configured with two pieces of spatial relation information is referred to as an M-TRP PUCCH resource, while a PUCCH resource configured with a single piece of spatial relation information is referred to as an S-TRP PUCCH resource.

TCI (transmission configuration indication) state/ beam indication

In the descriptions of the present disclosure, when data/DCI/UCI is transmitted/received on a specific spatial, time, or frequency resource, using (or mapping) a specific TCI state (or TCI) may mean the following: in the case of DL, it may imply that the UE estimates a channel from a DMRS using a QCL type and QCL RS indicated by the specific TCI state for the specific spatial, time, or frequency resource and then receives/demodulates the data/DCI/UCI using the estimated channel.

When data/DCI/UCI is received/transmitted on a specific spatial, time, or frequency resource, using (or mapping) a specific TCI state (or TCI) may mean the following: in the case of UL, it may mean that the UE transmits/modulates a DMRS and data/UCI using a Tx beam and/or Tx power indicated by the specific TCI state for the specific spatial, time, or frequency resource.

The UL TCI state may include information on the Tx beam or Tx power of the UE. Additionally, the BS may configure the UE with spatial relation information rather than the TCI state through other parameters.

For example, the UL TCI state may be directly indicated to the UE through UL grant DCI. Alternatively, the UL TCI state may refer to spatial relation information on a sounding reference signal (SRS) resource indicated by an SRS resource indicator (SRI) field in the UL grant DCI. Alternatively, the UL TCI state may refer to open-loop (OP) Tx power control parameters associated with a value indicated by the SRI field in the UL grant DCI.

Here, the OL Tx power control parameters may include, for example, j (the index for the OP parameter(s) Po and alpha (up to 32 parameter value sets per cell)), q_d (the index of a DL RS resource for path loss (PL) measurement (up to four measurements per cell), and/or I (the index of a closed-loop power control process (up to two processes per cell))

For the sake of convenience, it is assumed in the present disclosure that two TRPs cooperate to perform transmission/reception operations, but the present disclosure is not limited thereto. In other words, the present disclosure may be extended and applied to environments with three or more M-TRPs as well as to environments where transmission/reception is performed with different panels or beams within the same TRP. The UE may recognize different TRPs as different TCI states. When the UE transmits/receives data/DCI/UCI using TCI state 1, it means that the UE is transmitting/receiving data/DCI/UCI from or to TRP 1.

Generally, a TO refers to each channel transmitted at different times when multiple channels are time division duplexed (TDMed), each channel transmitted on different frequencies/RBs when multiple channels are frequency division multiplexed (FDMed), or each channel transmitted on different layers/beams/DMRS ports when multiple channels are spatial division multiplexed (SDMed). Each TO may be mapped to one TCI state. When the same channel is repeatedly transmitted, complete data/DCI/UCI is transmitted on one TO, and a receiver may receive multiple TOs to increase the success rate of reception.

Single DCI based multi-TB PUSCH/PDSCH scheduling

In Rel.17 NR, a single piece of DCI may schedule multiple PUSCHs/PDSCHs simultaneously in high frequency bands (beyond 5.26 GHz). For example, a Time Domain Resource Allocation (TDRA) field in PUSCH scheduling DCI may indicate multiple TDRA (i.e., multiple TOs) at once, and a different TB is transmitted over a PUSCH on each TO. Frequency domain resource allocation (FDRA), modulation and coding scheme (MCS), TPMI, and SRI values of the DCI are commonly applied to all scheduled TBs. Additionally, new data indicator (NDI) and redundancy version (RV) values for each TB are individually indicated through the DCI, while a HARQ number is indicated as a single value but sequentially increases in the order of TOs, starting from the initial TO.

STxMP (simultaneous transmission across multiple panels)

To support Rel. 18 NR standardization, methods for UEs to transmit multiple channels/RSs of the same type or different types simultaneously are being discussed. Currently, a conventional UEs is limited in transmitting multiple channels/RSs at the same moment (e.g., while the UE may simultaneously transmit multiple SRS resources in different SRS sets for UL beam measurement, the UE may not transmit multiple PUSCHs simultaneously). However, in the future, this limitation may be relaxed such that an advanced UE is allowed to simultaneously transmit multiple channels or RSs using multiple transmission panels, and such UEs are referred to as STxMP UEs. For example, two PUSCHs corresponding to two UL TBs may be scheduled on the same RE. For transmission of PUSCH 1 and PUSCH 2, spatial relation RS 1 and PC parameter set 1 (i.e., UL TCI state 1) are configured for PUSCH 1, and spatial relation RS 2 and PC parameter set 2 (i.e., UL TCI state 2) are configured for PUSCH 2. The UE transmits PUSCH 1 using panel 1 corresponding to UL TCI state 1 and at the same time transmits PUSCH 2 using panel 2 corresponding to UL TCI state 2.

When the BS schedules a PUSCH via DCI, the BS may indicate whether the PUSCH needs to be transmitted based on STxMP transmission, single-panel transmission, or M-TRP PUSCH repetition transmission. The UE needs to have STxMP capabilities, and the STxMP mode needs to be enabled in advance through RRC signaling. To this end, the existing SRS resource set indication field may be redefined, or a new DCI field may be introduced.

Unified TCI framework

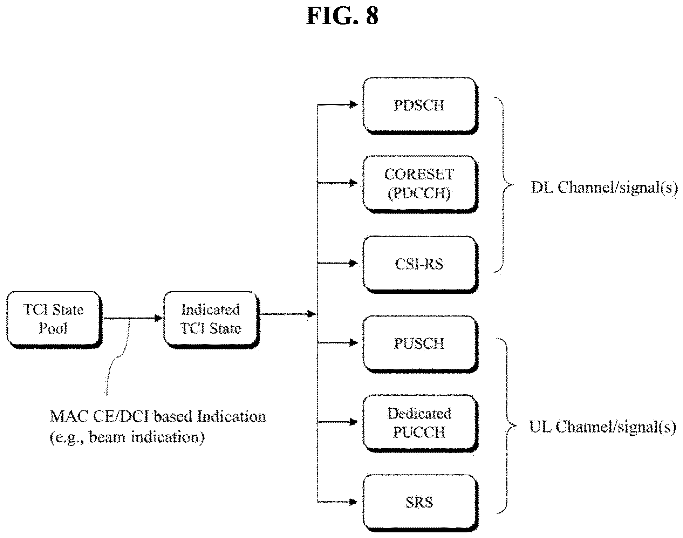

FIG. 8 is a diagram illustrating the concept of a unified TCI framework introduced in NR Rel. 17. In the Rel. 17 unified TCI framework, DL DCI (e.g., DCI format 1-1 or 1-2) may indicate not only a DL TCI state but also a UL TCI state together. Alternatively, the DL DCI may indicate only a UL TCI state with no DL TCI state. Thus, in Rel. 17, a dynamic beam update operation may be supported through a joint DL/UL TCI state indication or a separate DL/UL TCI state indication.

The dynamic beam update operation may include a common beam update. For example, the BS provide the UE with a common single beam for multiple specific channel/RS combinations through DCI and/or a MAC-CE. Thus, the UE may perform the common beam update operation.

In Rel-17, the dynamic beam update operation based on joint DL/UL TCI states and separate DL/UL TCI states has been introduced. In addition, the standardization of the UE common beam update operation has been performed, where the BS uses DCI and/or a MAC-CE to perform an indication/update with one beam in common for multiple specific channel/RS combinations to the UE. Regarding a target channel/RS for the common beam update, for DL, the common beam update may be applied to a UE-dedicated CORESET and UE-dedicated reception on a PDSCH. For UL, the common beam update may be applied to a dynamic grant)/configured grant (DG/CG) PUSCH and all or a subset of a dedicated PUCCH. Additionally, an aperiodic CSI-RS for tracking/BM and SRS may also be set as the target channel/RS for the common beam update.

Regarding the common beam applicability, the Rel-17 beam indication operation is mainly related to the single-TRP operation. In the unified TCI framework, if the number of DL TCI states is expressed as M and the number of UL TCI states is expressed as N, the numbers of DL/UL TCI states for common beam update in NR Rel. 17 are M=1 and N=1, respectively.

In NR Rel-18, regarding MIMO standardization, discussions are ongoing about the extension of the unified TCI framework configuration (M > 1 and/or N > 1) and the multi-TRP operation based on the configuration.

The content discussed so far regarding the Rel-18 unified TCI framework extension is summarized in Table 6.

[Table 6]

| TCI indication |
| --- |
| 1) Existing TCI field in DCI format 1_1/1_2 (w, w/o DLA) can indicate multiple joint/DL/UL TCI states |
| 2) # of codepoints: up to 8 |
| 3) Combination: J/J, S/S, J/S(X) up to 4 TCI states (in case of S/S) can be indicated in one codepoint |
| 4) For M-DCI based MTRP |
| - One joint TCI state can be mapped to a TCI codepoint |
| - DL/UL or a pair of DL/UL TCI states can be mapped to a TCI codepoint |
| 5) For S-DCI based MTRP: The existing TCI field in DCI can indicate joint/DL/UL TCI state(s) for one or both of the 2 TRPs in one beam indication instance |

In 3) combination of Table 6, J/J refers to (first DL+UL Joint TCI state / second DL+UL Joint TCI state), and S/S refers to (first DL separate TCI state and/or first UL separate TCI state / second separate TCI state and/or second UL separate TCI state). However, it is not necessary for both the first and second TCI states to be mapped to a single codepoint, as J/J or S/S. In addition, J/-, -/J, S/-, or -/S may also be used. More specifically, for a joint TCI, each codepoint in the TCI field included in DCI may be mapped as follows: (i) only one joint (=DL+UL) TCI state is mapped, or (ii) two joint (=DL+UL) TCI states, such as {first joint (=DL+UL) TCI state, second joint (=DL+UL) TCI state}, is be mapped. The number of mapped joint (=DL+UL) TCI state(s) may vary for each codepoint.

For a separate TCI, each codepoint in the TCI field may be mapped as follows: (i) one DL TCI state (e.g., first or second DL TCI state) and/or one UL TCI state (e.g., first or second UL TCI state) is mapped, or (ii) two separate (=DL and/or UL) TCI states, such as {first DL state and/or first UL TCI state, second DL state and/or second UL TCI state} are mapped. The number of mapped separate (=DL and/or UL) TCI state(s) may vary for each codepoint. For example, in the case of (i), the sum of the numbers of DL TCI states and UL TCI states mapped to one codepoint may be up to 2. In the case of (ii), the sum of the numbers of DL TCI states and UL TCI states mapped to one codepoint may be up to 4.

For the convenience of explanation, the (maximum) number of DL or joint TCI states mapped to one codepoint in the TCI field is denoted as M, and the (maximum) number of UL or joint TCI states mapped to one codepoint in the TCI field is denoted as N.

For example, if the total number of codepoints in the TCI field is assumed to be L, that is, if the size of the TCI field is assumed to be the ceiling function of (log 2L), in the joint TCI mode, the following may be satisfied: M = N = Max {# of joint TCI states of first codepoint, # of joint TCI states of second codepoint, ..., # of joint TCI states of L-th codepoint}. In the separate TCI mode, depending on the configuration, M and N may be the same or different. Specifically, (i) M = Max {# of DL TCI states of first codepoint, # of DL TCI states of second codepoint, ..., # of DL TCI states of S-th codepoint}, and (ii) N = Max {# of UL TCI states of first codepoint, # of UL TCI states of second codepoint, ..., # of UL TCI states of L-th codepoint}.

M may be referred to as the number of indicated DL or joint TCI state(s) (e.g., max number per 1 codepoint), and N may be referred to as the number of indicated UL or joint TCI state(s) (e.g., max number per 1 codepoint).

The UE may maintain/update M indicated TCI states for DL and N indicated TCI states for UL.

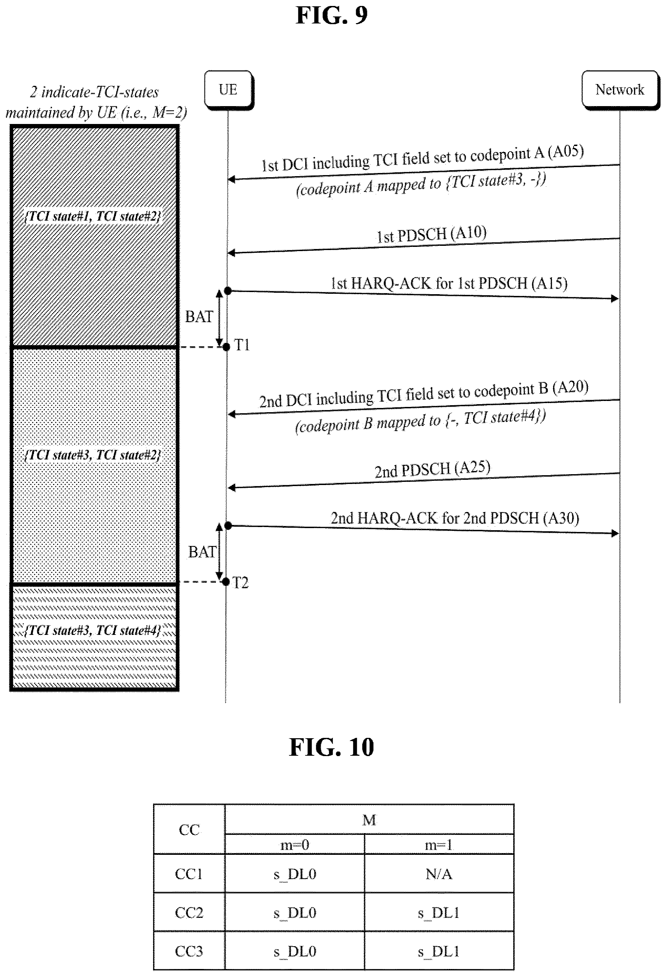

FIG. 9 illustrates an example of update/maintenance of indicated TCI states of a UE.

For convenience of the explanation, the following assumptions are made in FIG. 9: (i) the UE receives a DL or joint TCI state list via RRC signaling; (ii) the number of indicated TCI states for DL is M=2; (iii) the UE receives an RRC parameter indicating that a TCI field is provided in DCI (TCI-present in DCI: enabled); (iv) codepoint A in the TCI field indicates a first TCI state for DL as TCI state #3, and a second TCI state for DL is not provided, and codepoint B in the TCI field does not provide the first TCI state for DL, but indicates the second TCI state for DL as TCI state #4; (v) the TCI field may be used for both non-scheduling DCI and scheduling DCI, but in FIG. 9, it is assumed that the TCI field is included in PDSCH scheduling DCI; (vi) at the start of FIG. 9, it is assumed that two indicated TCI states currently maintained by the UE are {TCI state#1, TCI state#2}; and (vii) although DL is used as an example in FIG. 9, it may also be applied to UL. In this case, the DCI may be UL scheduling DCI that schedules a PUSCH or non-scheduling DCI. The PDSCH reception of the UE is replaced by PUSCH transmission, and the HARQ_ACK transmission of the UE is replaced by the HARQ-ACK transmission of the BS.

Referring to FIG. 9, the UE receives first DCI (A05). The TCI field of the first DCI is set to codepoint A, and the first DCI schedules a first PDSCH.

Based on the first DCI, the UE may receive the first PDSCH (A10). In this case, since the UE does not apply/update TCI state#3 TCI state#3, which is indicated through codepoint A of the TCI field, as a first indicated TCI state, the UE may receive the first PDSCH based on at least one of the currently indicated TCI states {TCI state#1, TCI state#2}. If the first DCI includes a TCI selection field as configured by RRC, at least one of {TCI state#1, TCI state#2} may be selected based on the TCI selection field, and the UE may receive the first PDSCH based on the selection.

The UE transmits a first HARQ-ACK for the first PDSCH (A15).

If the first HARQ-ACK is an ACK (positive), the UE updates the indicated TCI states that the UE maintains to {TCI state#3, TCI state#2} based on the TCI field of the first DCI, after a beam application time (BAT) has elapsed from the end (last symbol) of the first HARQ-ACK transmission. That is, since codepoint A does not provide a TCI state for a second indicated TCI state the UE maintains, the second indicated TCI state the UE maintains remains as TCI state#2.

On the other hand, in the example of FIG. 9, since it is assumed that the first DCI is scheduling DCI, the first HARQ-ACK is related to the first PDSCH. However, if the first DCI is not scheduling DCI, the first HARQ-ACK may be related to HARQ-ACK information for the reception of the first DCI. In the latter case, if the HARQ-ACK for the reception of the first DCI is an ACK (positive), the BAT is applied, and the starting point of the BAT may be a point where the HARQ-ACK transmission for the reception of the first DCI ends.

Subsequently, the UE receives second DCI (A20). The TCI field of the second DCI is set to codepoint B, and the second DCI schedules a second PDSCH.

Based on the second DCI, the UE may receive the second PDSCH (A25). In this case, since the UE does not apply/update TCI state#3, which is indicated through codepoint A of the TCI field, as the first indicated TCI state, the UE may receive the second PDSCH based on at least one of the current indicated TCI states {TCI state#3, TCI state#2}. If the second DCI includes a TCI selection field as configured by RRC, at least one of {TCI state#3, TCI state#2} may be selected based on the TCI selection field, and the UE may receive the second PDSCH based on the selection.

The UE transmits a second HARQ-ACK for the second PDSCH (A15).

If the second HARQ-ACK is an ACK (positive), the UE updates the indicated TCI states that the UE maintains to {TCI state#3, TCI state#4} based on the TCI field of the second DCI, after a BAT has elapsed from the end (last symbol) of the second HARQ-ACK transmission. That is, since codepoint B does not provide a TCI state for the first indicated TCI state the UE maintains, the first indicated TCI state the UE maintains remains as TCI state#3.

On the other hand, in the example of FIG. 9, since it is assumed that the second DCI is scheduling DCI, the second HARQ-ACK is related to the second PDSCH. However, if the second DCI is not scheduling DCI, the second HARQ-ACK may be related to the HARQ-ACK information for the reception of the second DCI. In the latter case, if the HARQ-ACK for the reception of the second DCI is an ACK (positive), the BAT is applied, and the starting point of the BAT may be a point where the HARQ-ACK transmission for the reception of the second DCI ends.

For the indicated TCI state(s), a simultaneous TCI state update/activation operation for multiple CCs included in a CC list, along with a specific target CC, has been introduced in Rel-17. The details are shown in Table 7.

[Table 7]

| Rel-17 Common TCI state ID activation/update |
| --- |
| For common TCI state ID update and activation to provide common QCL information at least for UE-dedicated PDCCH/PDSCH and/or common UL Tx spatial filter(s) at least for UE-dedicated PUSCH/PUCCH across a set of configured CCs/BWPs |
| 1) RRC-configured TCI state pool(s) can be configured in the PDSCH configuration for each BWP/CC |
| 2) RRC-configured TCI state pool(s) can be absent in the PDSCH configuration for each BWP/CC, and replaced with a reference to RRC-configured TCI state pool(s) in a reference BWP/CC |
| - In the PDSCH configuration of the reference BWP/CC, RRC-configured TCI state pool(s) shall be configured |
| - For a BWP/CC where the PDSCH configuration contains a reference to the RRC-configured TCI state pool(s) in a reference BWP/CC, the UE applies the RRC-configured TCI state pool(s) in the reference BWP/CC |
| 3) When the BWP/CC ID for QCL-Type A/D source RS in a QCL-info of the TCI state is absent, the UE assumes that QCL-Type A/D source RS is in the BWP/CC to which the TCI state applies |
| 4) The details on how the PDSCH configuration contains a reference to the RRC-configured TCI state pool(s) in a reference BWP/CC are up to RAN2 |
| **5) Regarding the CC list for common TCI state ID update and activation, introduce new RRC parameter(s) to configure the CC list(s) up to 4** |

As shown in Table 7, since the Rel-17 unified TCI framework only considers the case where M=N=1, a single indicated TCI state may be used to perform common update for DL/UL beams across multiple CCs.

In the Rel-18 unified TCI framework, which considers multiple transmission and reception point (MTRP) extension, simultaneous TCI state update for multiple CCs including a target CC may be considered. In this case, it should be considered that for each CC, the same or different M/N configurations may be configured (via RRC). As a result, if a CC list for simultaneous TCI update includes CC(s) with different M/N configurations, indicated TCI state(s) of a specific CC may be applied to other CC(s) in the list, which may lead to issues.

To avoid such issues, CCs with the same M/N configuration may be grouped together in the list. Alternatively, only CC(s) with the same M/N configuration may be updated when the CC list includes CCs with different M/N configurations. In this case, there may be no issues with the operation of simultaneous TCI update for multiple CCs based on the indicated TCI state(s) of a specific CC. However, another issue arises in that multiple CC lists need to be configured for each case and beam indications should also be performed for each case. As a result, control signaling overhead for common beam indications increases, which weakens the original purpose of the simultaneous TCI update.

To address these issues, the present disclosure proposes a method of performing simultaneous TCI update/activation when CC(s) with different M/N configurations are included in a CC list.

## 1. Proposal 1

When a CC list for the purpose of simultaneous TCI update/activation is configured, CCs with the same or different M/N configurations may be included in the same CC list. The number of indicated TCI states to be applied to CCs in the CC list is determined based on the (largest) M/N value within the CC list (e.g., CC1 for {M=2, N=1} and CC2 for {M=1, N=2} → S_DL=2, S_UL=2). S_DL and S_UL refer to the number of DL or joint TCI states and the number of UL or joint TCI states, respectively, which are applied to the CC list during the simultaneous TCI update/activation.

Proposal 1 is a method of configuring the same or different M/N configurations in a single CC list when multiple CCs to be applied for simultaneous TCI update are configured within the CC list and a method of determining indicated TCI state(s) to be applied to multiple CCs. For example, in Table 8, it is assumed that a CC list is composed of {CC1, CC2, CC3}, and the M/N configurations for each CC are as follows.

[Table 8]

| |
| --- |
| - M=1, N=1 for CC1 |
| - M=2, N=1 for CC2 |
| - M=2, N=2 for CC3 |

When a TCI indication is performed on a specific CC, simultaneous TCI update needs to be performed by applying updated TCI state(s) to other CC(s) in the CC list. Therefore, the number of indicated TCI states to be applied to the multiple CCs needs to be determined based on the largest values of M and N within the CC list.

In the example from Table 8, the maximum values of M and N within the CC list are both 2, and the number of indicated TCI states (i.e. S_DL and S_UL) for simultaneous TCI state update (for DL/UL) is determined to be 2. The two indicated TCI states for S_DL in the CC list are denoted as s_DL0 and s_DL1, while the two indicated TCI states for S_UL in the CC list are denoted as s_UL0 and s_UL1. Depending on the joint/separate TCI mode, the same or different TCI states may be indicated for the following pairs: {s_DL0, s_UL0} and {s_DL1, s_UL1}.

In a more general form, if the CC list of a CC group is [CC 1, CC 2, ..., CC k], and the M values for k CCs for DL are denoted as [M 1, M 2, ..., M k], and the N values for k CCs for UL are denoted as [N 1, N 2, ..., N k], S_DL and S_UL are as follows: S_DL = Max [M 1, M 2, ..., M k] and S_UL = Max [N 1, N 2, ..., N k]. The codepoints in the TCI field of DCI provided for the CC group may be mapped to (at most) S_DL indicated DL or joint TCI states and (at most) S_UL indicated UL or joint TCI states. The statement that the codepoints in a TCI field may be mapped to 'X' (e.g., S_DL or S_UL) TCI states does not necessarily mean that every codepoint should be mapped to exactly 'X' TCI states. For example, codepoint #1 may be mapped to X TCI states, while codepoint #2 may be mapped to X-Y TCI states, where Y is a positive integer that does not exceed X.

## 2. Proposal 2

Based on the explanation in Proposal 1, it is proposed that when TCI state indication information is provided for a specific CC, (i) information regarding indicated TCI state(s) for the specific CC is associated with (ii) the indicated TCI state(s) (i.e., S_DL and/or S_UL) to be applied to multiple CCs, and based on the association, TCI state updates for other CCs are performed simultaneously.

A CC list configuration may be provided to the UE. That is, (i) indicated TCI state(s) for each CC and (ii) indicated TCI state(s) to be applied to CCs in a CC list may be associated (implicitly or explicitly), and the UE performs simultaneous TCI state update based on the association. To avoid confusion between (i) the indicated TCI state(s) for each CC and (ii) the indicated TCI state(s) for the entire CC list, (i) the indicated TCI state(s) for each CC and (ii) the indicated TCI state(s) for the entire CC list are denoted as '(i) per CC_indicated TCI state(s)' and '(ii) per CC group_indicated TCI state(s)', respectively.

For the convenience of explanation, for DL, M indicated TCI states of a specific CC are denoted as m=0 and m=1 (where m=1 corresponds to the case where M=2), and for UL, N indicated TCI states of the specific CC are denoted as n=0 and n=1 (where n=1 corresponds to the case where N=2).

### 1) Rule-based mapping

For example, the per CC group_indicated TCI state(s) of s_DL=0/s_UL=0 may be mapped to a first per CC_DL/UL indicated TCI state of each CC, and the per CC group_indicated TCI state(s) of s_DL=1/s_UL=1 may be mapped to a second per CC DL/UL indicated TCI state of each CC. For a CC with M=N=1, the per CC group_indicated TCI state(s) may always be mapped to the first per CC DL TCI state with m=0 and the first per CC UL indicated TCI state with n=0.

### 2) Network configuration/indication-based mapping

For example, information regarding which m/n values is to be applied for each CC may be configured through network signaling (e.g., RRC/MAC CE, etc.).

For CCs with various M/N configurations in a CC list, a method of associating the per CC group_indicated TCI state(s) to be applied to multiple CCs with the TCI indication of a specific CC (e.g., the TCI field of DCI received on the specific CC) will be described along with the TCI update operation based on the association. This may be expressed as implicit/explicit mapping with the per CC group_indicated TCI state(s) to be applied to multiple CCs when the TCI indication is performed for each CC.

FIG. 10 illustrates an example of TCI indication association for DL on the assumption of the CC list and M configurations in Table 8. Referring to FIG. 10, the following assumption is made. For CC1, m=0 for M=1 is mapped to s_DL0. For CC2, m=0 and m=1 for M=2 are mapped to s_DL0 and s_DL1. For CC3, m=0 and m=1 for M=2 are mapped to s_DL0 and s_DL1.

In this situation, if a DL TCI state is indicated through DCI received from CC1, the indicated TCI state may be s_DL0 (since m=1 is not configured for CC1). Based on the mapping of s_DL0 indicated for CC1 to s_DL0 for CC2 and CC3, the TCI state with m=0 may be updated in each CC.

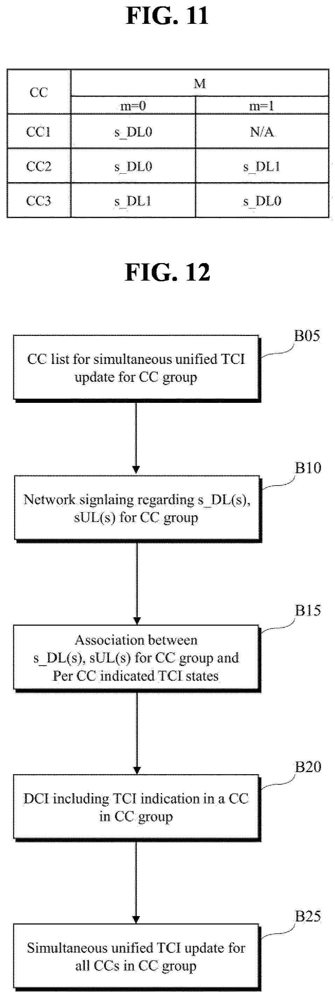

In this case, instead of following a predefined mapping method, different mapping may be applied to each CC. For example, referring to FIG. 11, both CC2 and CC3 have M=2, but the TCI state mapping for CC2 may be configured as follows: for m=0, s_DL0, and for m=1, s_DL1. On the other hand, the TCI state mapping for CC3 may be configured as follows: for m=0, s_DL1, and for m=1, s_DL0. Accordingly, it is possible to apply the indicated TCI state(s) of a specific CC to other CCs within the CC group simultaneously while reversing the order of mapping. Alternatively, for the method shown in FIG. 11, the order of pairs may be swapped by using the mapping of m=0/1 for s_DL0/s_DL1 as the default.

Based on the explanation above, a simultaneous unified TCI activation/update procedure will be explained with reference to FIG. 12.

For simultaneous unified TCI activation/update of CCs belonging to a CC group, the UE may receive a list of CCs constituting the CC group through RRC signaling from the network (B05). While a single CC group may be configured for the UE, multiple CC groups may be configured depending on the network configuration. The CC list is provided for each CC group. The CC group may be configured without restrictions on the similarity of M/N values between CCs.

The UE may receive network signaling for indicated DL/UL TCI states to be applied to the CC group (i.e., s_DL(s) and s_UL(s)) (B10). The network signaling may be received through any one CC within the CC group and may be applied commonly to all CCs within the CC group. The network signaling may include at least one of a MAC CE or RRC signaling. For the convenience of explanation, separated indicated DL/UL TCI states are assumed, but the present disclosure is not limited thereto. The disclosure may also be applied to joint indicated DL/UL TCI states.

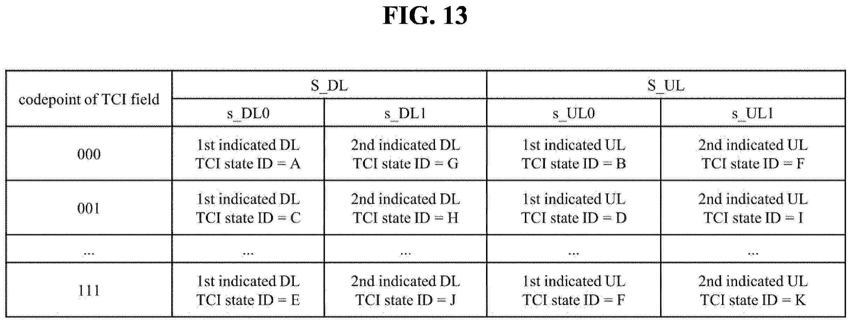

FIG. 13 is a diagram explaining an example of network signaling (B10). FIG. 13 assumes the example in Table 8. Referring to FIG. 13, since S_DL=2, a first indicated DL TCI state ID for s_DL0 and a second indicated DL TCI state ID for s_DL1 are configured for each codepoint. Additionally, since S_UL=2, a first indicated UL TCI state ID for s_UL0 and a second indicated UL TCI state ID for s_UL1 are configured for each codepoint. For example, when the codepoint for the TCI field of a CC group (i.e., TCI indication information) is 000, the indicated TCI states for CC groups are [first indicated DL TCI state ID=A, second indicated DL TCI state ID=G, first indicated UL TCI state ID=B, second indicated UL TCI state ID=F]. In FIG. 13, for the convenience of explanation, all the four states (first/second DL/UL indicated TCI states) are provided, but depending on the implementation, some TCI states may not be mapped.

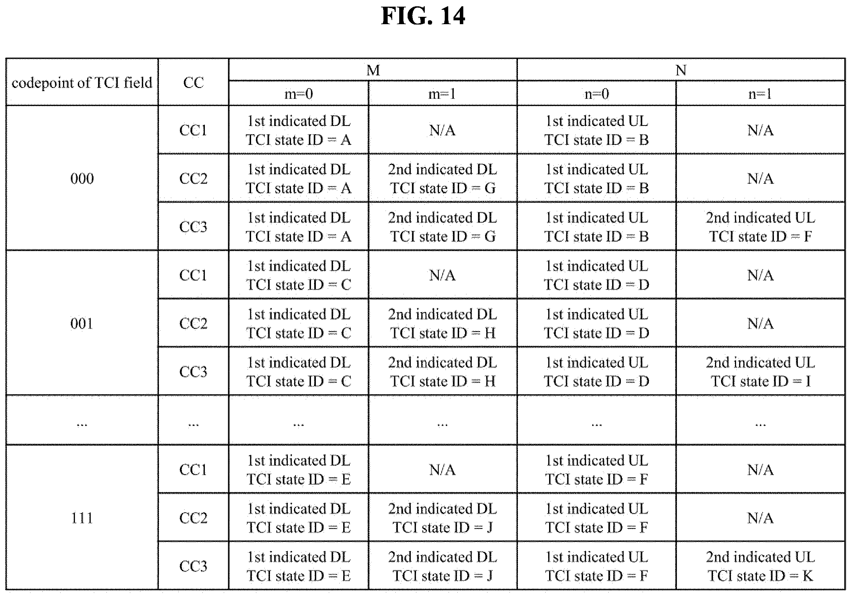

Returning to FIG. 12, based on the network signaling (B10), the association between s_DL(s)/s_UL(s) for a given CC group (e.g., FIG. 13) and the TCI states for each CC may be determined (B15). FIG. 14 illustrates an example of the association between (i) s_DL(s)/s_UL(s) for the CC group shown in FIG. 13 and (ii) the M/N values for each CC in Table 8. For CC1, since M=1, first indicated DL TCI state ID=A is mapped only to m=0, and since N=1, first indicated UL TCI state ID=B is mapped only to n=0. For CC2, since M=2 and N=2, all the following: [first indicated DL TCI state ID=A, second indicated DL TCI state ID=G, first indicated UL TCI state ID=B, second indicated UL TCI state ID=F] are mapped.

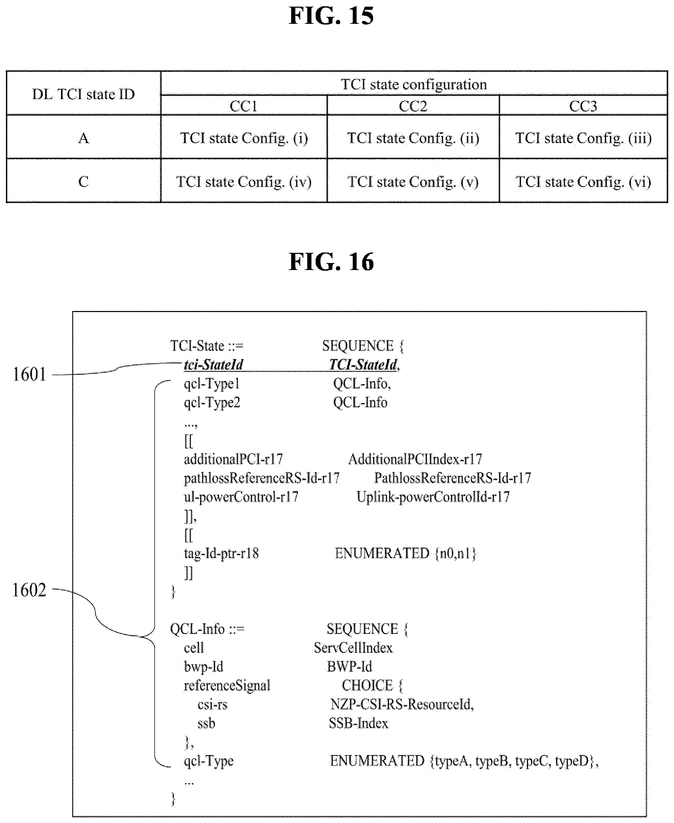

When DCI containing TCI field = 000 is received, the ID of the first indicated DL TCI state for CC1, CC2, and CC3 may all be DL TCI state ID = A. However, the actual parameters of the TCI state configuration represented by DL TCI state ID = A may vary for each CC. For example, referring to FIGS. 15 and 16, TCI field ID = A in FIG. 15 means the following: TCI state configuration (i) for CC1, TCI state configuration (ii) for CC1, and TCI state configuration (iii) for CC1. In other words, while a parameter 1601 in TCI state configurations (i) to (iii) in FIG. 16 has the same value, other parameters 1602 are not necessarily the same. The reason for this is that the TCI state configuration and ID are RRC configurations provided per CC.

Returning to FIG. 12, the UE may receive DCI including a TCI field through (any) one CC within a CC group (B20).

The UE may perform simultaneous TCI state update for all CCs belonging to the CC group based on TCI indication information in the TCI field (B25). For example, referring to FIG. 14, if DCI including TCI field = 001 is received on CC1, for CC1 with M=1/N=1, the UE may update a first indicated DL/UL state to [first indicated DL TCI state with ID=C, first indicated UL TCI state with ID=D]. For CC2 and CC3 with M=2/N=2, the UE may perform update as follows: [first indicated DL TCI state with ID=C, second indicated DL TCI state with ID=H, first indicated UL TCI state with ID=D, second indicated UL TCI state with ID=I]. The BAT and update process based on the TCI indication may be referred to in the explanation provided above with reference to FIG. 9.

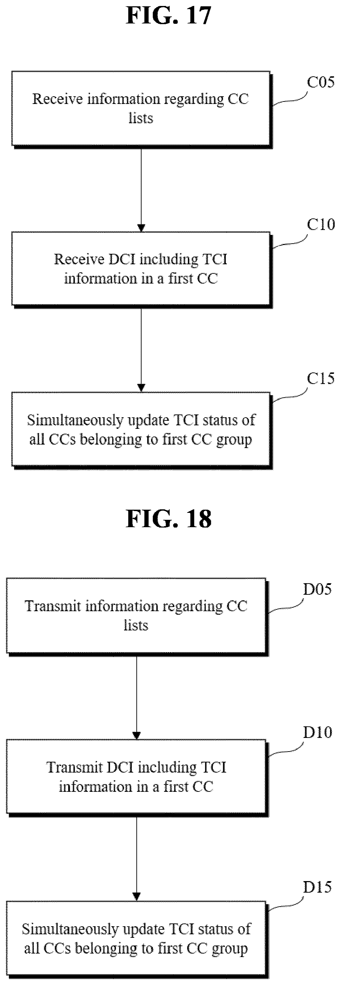

FIG. 17 is a diagram illustrating operations of a UE according to an embodiment.

Referring to FIG. 17, the UE may receive information regarding one or more CC lists for configuring one or more CC groups (C05).

The UE may receive DCI including TCI information in a first CC (C10).

Based on the TCI information included in the DCI, the UE may simultaneously update at least one TCI state for each of the CCs belonging to the same first CC group as the first CC (C15).

The association between the values for the TCI information and the TCI states to be applied to the CCs of the first CC group may be configured through network signaling.

Based on that the TCI information in the DCI is set as a first value for updating a j-th TCI state, the UE may update the j-th TCI state indicated for each CC of the first CC group to a TCI state associated with the first value.

The TCI state associated with the first value may be configured independently for each CC.

For the first CC, TCI state 'A' configured for the first CC may be associated with the first value, and for a second CC of the first CC group, TCI state 'B' configured for the second CC may be associated with the first value. The TCI state 'A' and the TCI state 'B' may be different from each other.

All CCs of the first CC group may be activated simultaneously through the network signaling.

The updated at least one TCI state may either be a joint TCI state for both DL and UL or separate TCI states for DL and UL respectively.

The number of DL TCI states (M1) and the number of UL TCI states (N1) indicated for the first CC may be independent of the number of DL TCI states (M2) and the number of UL TCI states (N2) indicated for the second CC of the CC group.

The UE may receive information explicitly indicating the association between the values for the TCI information and the TCI states to be applied to the CCs of the first CC group through the network signaling.

The values for the TCI information may be codepoints of a TCI field included in the DCI.

FIG. 18 is a diagram illustrating operations of a network node according to an embodiment. The network node may include/control one or more TRPs/BSs.

Referring to FIG. 18, the network node may transmit information regarding one or more CC lists for configuring one or more CC groups to a UE (D05).

The network node may transmit DCI including TCI information to the UE on a first CC (D10).

Based on the TCI information included in the DCI, the network node may simultaneously update at least one TCI state for each of the CCs belonging to the same first CC group as the first CC (D15).

The association between the values for the TCI information and the TCI states to be applied to the CCs of the first CC group may be configured through network signaling provided to the UE by the network node.

Based on that the TCI information in the DCI is set as a first value for updating a j-th TCI state, the network node may update the j-th TCI state indicated for each CC of the first CC group to a TCI state associated with the first value.

The TCI state associated with the first value may be configured independently for each CC.

For the first CC, TCI state 'A' configured for the first CC may be associated with the first value, and for a second CC of the first CC group, TCI state 'B' configured for the second CC may be associated with the first value. The TCI state 'A' and the TCI state 'B' may be different from each other.

All CCs of the first CC group may be activated simultaneously through the network signaling.

The updated at least one TCI state may either be a joint TCI state for both DL and UL or separate TCI states for DL and UL respectively.

The number of DL TCI states (M1) and the number of UL TCI states (N1) indicated for the first CC may be independent of the number of DL TCI states (M2) and the number of UL TCI states (N2) indicated for the second CC of the CC group.

The network node may transmit information explicitly indicating the association between the values for the TCI information and the TCI states to be applied to the CCs of the first CC group through the network signaling.

The values for the TCI information may be codepoints of a TCI field included in the DCI.

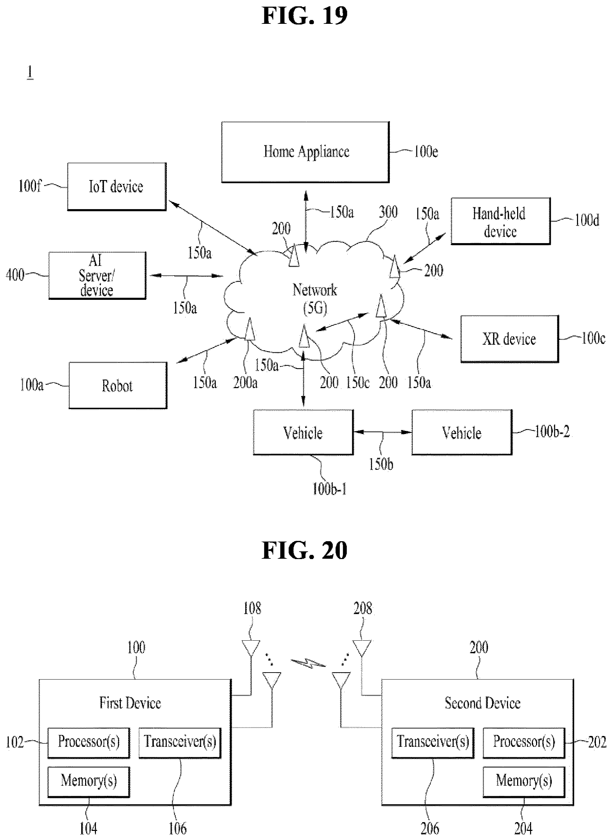

FIG. 19 illustrates a communication system 1 applied to the present disclosure.

Referring to FIG. 19, a communication system 1 includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g., Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g., relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

FIG. 20 illustrates wireless devices applicable to the present disclosure.

Referring to FIG. 20, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 19.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

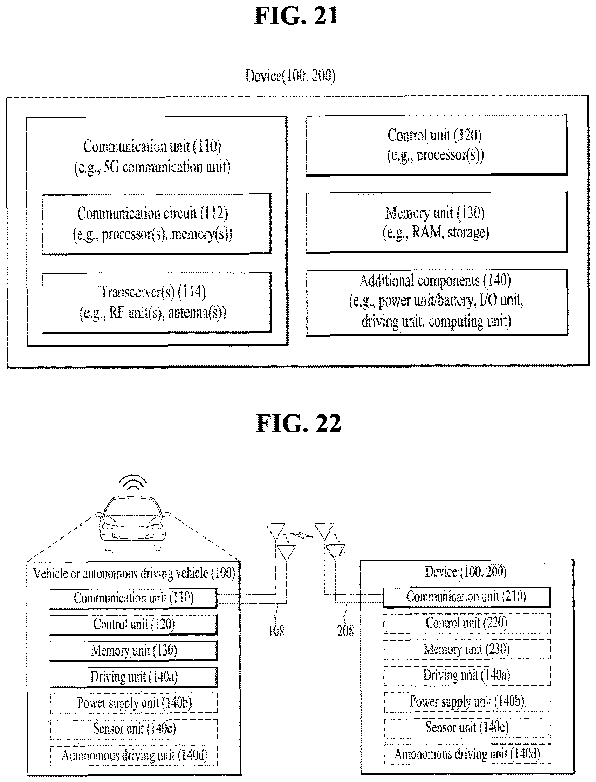

FIG. 21 illustrates another example of a wireless device applied to the present disclosure. The wireless device may be implemented in various forms according to a use-case/service (refer to FIG. 19).

Referring to FIG. 21, wireless devices 100 and 200 may correspond to the wireless devices 100 and 200 of FIG. 20 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 20. For example, the transceiver(s) 114 may include the one or more transceivers 106 and 206 and/or the one or more antennas 108 and 208 of FIG. 20. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 19), the vehicles (100b-1 and 100b-2 of FIG. 19), the XR device (100c of FIG. 19), the hand-held device (100d of FIG. 19), the home appliance (100e of FIG. 19), the IoT device (100f of FIG. 19), a digital broadcast terminal, a hologram device, a public safety device, an MTC device, a medicine device, a fintech device (or a finance device), a security device, a climate/environment device, the AI server/device (400 of FIG. 19), the BSs (200 of FIG. 19), a network node, etc. The wireless device may be used in a mobile or fixed place according to a use-example/service.

In FIG. 21, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

FIG. 22 illustrates a vehicle or an autonomous driving vehicle applied to the present disclosure. The vehicle or autonomous driving vehicle may be implemented by a mobile robot, a car, a train, a manned/unmanned Aerial Vehicle (AV), a ship, etc.

Referring to FIG. 22, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 21, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). The driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

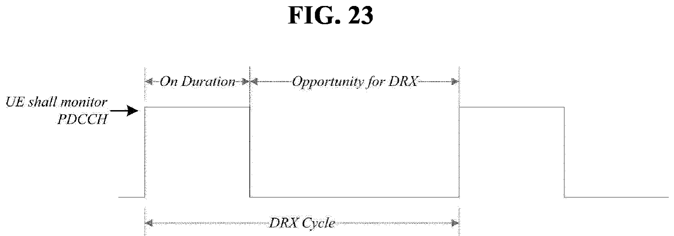

FIG. 23 is a diagram illustrating a DRX operation of a UE according to an embodiment of the present disclosure.

The UE may perform a DRX operation in the afore-described/proposed procedures and/or methods. A UE configured with DRX may reduce power consumption by receiving a DL signal discontinuously. DRX may be performed in an RRC_IDLE state, an RRC_INACTIVE state, and an RRC_CONNECTED state. The UE performs DRX to receive a paging signal discontinuously in the RRC_IDLE state and the RRC_INACTIVE state. DRX in the RRC_CONNECTED state (RRC_CONNECTED DRX) will be described below.

Referring to FIG. 23, a DRX cycle includes an On Duration and an Opportunity for DRX. The DRX cycle defines a time interval between periodic repetitions of the On Duration. The On Duration is a time period during which the UE monitors a PDCCH. When the UE is configured with DRX, the UE performs PDCCH monitoring during the On Duration. When the UE successfully detects a PDCCH during the PDCCH monitoring, the UE starts an inactivity timer and is kept awake. On the contrary, when the UE fails in detecting any PDCCH during the PDCCH monitoring, the UE transitions to a sleep state after the On Duration. Accordingly, when DRX is configured, PDCCH monitoring/reception may be performed discontinuously in the time domain in the afore-described/proposed procedures and/or methods. For example, when DRX is configured, PDCCH reception occasions (e.g., slots with PDCCH SSs) may be configured discontinuously according to a DRX configuration in the present disclosure. On the contrary, when DRX is not configured, PDCCH monitoring/reception may be performed continuously in the time domain. For example, when DRX is not configured, PDCCH reception occasions (e.g., slots with PDCCH SSs) may be configured continuously in the present disclosure. Irrespective of whether DRX is configured, PDCCH monitoring may be restricted during a time period configured as a measurement gap.

Table 13 describes a DRX operation of a UE (in the RRC_CONNECTED state). Referring to Table 13, DRX configuration information is received by higher-layer signaling (e.g., RRC signaling), and DRX ON/OFF is controlled by a DRX command from the MAC layer. Once DRX is configured, the UE may perform PDCCH monitoring discontinuously in performing the afore-described/proposed procedures and/or methods.

[Table 9]

|  | Type of signals | UE procedure |
|---|---|---|
| first step | RRC signalling(MAC-CellGroupConfig) | - Receive DRX configuration information |
| second Step | MAC CE ((Long) DRX command MAC CE) | - Receive DRX command |
| 3rd **Step** | - | - Monitor a PDCCH during an on-duration of a DRX cycle |

MAC-CellGroupConfig includes configuration information required to configure MAC parameters for a cell group. MAC-CellGroupConfig may also include DRX configuration information. For example, MAC-CellGroupConfig may include the following information in defining DRX. Value of drx-OnDurationTimer: defines the duration of the starting period of the DRX cycle.

Value of drx-InactivityTimer: defines the duration of a time period during which the UE is awake after a PDCCH occasion in which a PDCCH indicating initial UL or DL data has been detected

Value of drx-HARQ-RTT-TimerDL: defines the duration of a maximum time period until a DL retransmission is received after reception of a DL initial transmission.

Value of drx-HARQ-RTT-TimerDL: defines the duration of a maximum time period until a grant for a UL retransmission is received after reception of a grant for a UL initial transmission.

drx-LongCycleStartOffset: defines the duration and starting time of a DRX cycle.
drx-ShortCycle (optional): defines the duration of a short DRX cycle.

When any of drx-OnDurationTimer, drx-InactivityTimer, drx-HARQ-RTT-TimerDL, and drx-HARQ-RTT-TimerDL is running, the UE performs PDCCH monitoring in each PDCCH occasion, staying in the awake state.

The above-described embodiments correspond to combinations of elements and features of the present disclosure in prescribed forms. And, the respective elements or features may be considered as selective unless they are explicitly mentioned. Each of the elements or features can be implemented in a form failing to be combined with other elements or features. Moreover, it is able to implement an embodiment of the present disclosure by combining elements and/or features together in part. A sequence of operations explained for each embodiment of the present disclosure can be modified. Some configurations or features of one embodiment can be included in another embodiment or can be substituted for corresponding configurations or features of another embodiment. And, it is apparently understandable that an embodiment is configured by combining claims failing to have relation of explicit citation in the appended claims together or can be included as new claims by amendment after filing an application.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

## INDUSTRIAL APPLICABILITY

The present disclosure is applicable to UEs, BSs, or other apparatuses in a wireless mobile communication system.

**Claims**

1. A method of receiving signals by a user equipment (UE) in a wireless communication system, the method comprising:

   receiving information regarding one or more component carrier (CC) lists for configuring one or more CC groups;
   receiving downlink control information (DCI) including transmission configuration indication (TCI) information in a first CC; and
   simultaneously updating at least one TCI state for each of CCs belonging to a same first CC group as the first CC, based on the TCI information included in the DCI,
   wherein association between values for the TCI information and TCI states to be applied to the CCs of the first CC group is configured through network signaling.

2. The method of claim 1, wherein based on that the TCI information in the DCI is set as a first value for updating a j-th TCI state, the UE updates the j-th TCI state indicated for each CC of the first CC group to a TCI state associated with the first value.

3. The method of claim 2, wherein the TCI state associated with the first value is configured independently for each CC.

4. The method of claim 2, wherein for the first CC, TCI state 'A' configured for the first CC is associated with the first value,

   wherein for a second CC of the first CC group, TCI state 'B' configured for the second CC is associated with the first value, and
   wherein the TCI state 'A' and the TCI state 'B' are different from each other.

5. The method of claim 1, wherein all CCs of the first CC group are activated simultaneously through the network signaling.

6. The method of claim 1, wherein the updated at least one TCI state is either a joint TCI state for both downlink and uplink or separate TCI states for downlink and uplink, respectively.

7. The method of claim 1, wherein a number of downlink TCI states (M1) and a number of uplink TCI states (N1) indicated for the first CC are independent of a number of downlink TCI states (M2) and a number of uplink TCI states (N2) indicated for the second CC of the CC group.

8. The method of claim 1, further comprising receiving information explicitly indicating the association between the values for the TCI information and the TCI states to be applied to the CCs of the first CC group through the network signaling.

9. The method of claim 1, wherein the values for the TCI information are codepoints of a TCI field included in the DCI.

10. A computer-readable recording medium having recorded thereon a program for executing the method of claim 1.

11. A device for wireless communication, the device comprising:

    a memory configured to store instructions; and
    a processor configured to perform operations by executing the instructions,
    wherein the operations of the processor comprise:

       receiving information regarding one or more component carrier (CC) lists for configuring one or more CC groups;
       receiving downlink control information (DCI) including transmission configuration indication (TCI) information in a first CC; and
       simultaneously updating at least one TCI state for each of CCs belonging to a same first CC group as the first CC, based on the TCI information included in the DCI,
       wherein association between values for the TCI information and TCI states to be applied to the CCs of the first CC group is configured through network signaling.

12. The device of claim 11, further comprising a transceiver configured to transmit or receive wireless signals under control of the processor, wherein the device is a user equipment (UE) in a wireless communication system.

13. The device of claim 11, wherein the device is a signal processing device configured to control a user equipment (UE).

14. A method of transmitting signals by a network node in a wireless communication system, the method comprising:

transmitting information regarding one or more component carrier (CC) lists for configuring one or more CC groups to a user equipment (UE);
transmitting downlink control information (DCI) including transmission configuration indication (TCI) information to the UE on a first CC; and
simultaneously updating at least one TCI state for each of CCs belonging to a same first CC group as the first CC, based on the TCI information included in the DCI,
wherein association between values for the TCI information and TCI states to be applied to the CCs of the first CC group is configured through network signaling provided to the UE by the network node.

15. A network node for wireless communication, the network node comprising:

a memory configured to store instructions; and
a processor configured to perform operations by executing the instructions,
wherein the operations of the processor comprise:

transmitting information regarding one or more component carrier (CC) lists for configuring one or more CC groups to a user equipment (UE);
transmitting downlink control information (DCI) including transmission configuration indication (TCI) information to the UE on a first CC; and
simultaneously updating at least one TCI state for each of CCs belonging to a same first CC group as the first CC, based on the TCI information included in the DCI,
wherein association between values for the TCI information and TCI states to be applied to the CCs of the first CC group is configured through network signaling provided to the UE by the network node.

# FIG. 1

Initial Cell Search

System Information Reception

Random Access Procedure

General DL/UL Tx/Rx
S108

| PSS/SSS & [DLRS] & PBCH | PDCCH/ PDSCH (BCCH) | PRACH | PDCCH/ PDSCH | PRACH | PDCCH/ PDSCH | PDCCH/ PDSCH | PUSCH/ PUCCH |

S101　　　S102　　　S103　S104　　S105　S106　　S107

· DL/UL ACK/NACK
· UE CQI/PMI/Rank Report using PUSCH and PUCCH

# FIG. 2

| ...... | One Frame (10ms) | ...... |

| ...... | Half-Frame (5ms) | Half-Frame (5ms) | ...... |

| ...... | Subframe 0 (1ms) | ...... | Subframe 4 (1ms) | Subframe 5 (1ms) | ...... | Subframe 9 (1ms) | ...... |

Subframe (1ms)

15KHz | Slot (14 symbols) |

1ms

30KHz | Slot 0 (14 symbols) | Slot 1 |

500us

60KHz | Slot 0 (14 symbols) | Slot 1 | Slot 2 | Slot 3 |

250us

120KHz | Slot 0 (14 symbols) | Slot 1 | Slot 2 | Slot 3 | Slot 4 | Slot 5 | Slot 6 | Slot 7 |

125us

# FIG. 3

Resource grid

A carrier
(up to 3300 subcarriers, i. e., 275 RBs)

A BWP

1 RB = 12 subcarriers

1 RE

1 subcarrier

1 symbol

# FIG. 4

# FIG. 5

# FIG. 6

UL grant-to-PUSCH offset (K2)

PDCCH

PUSCH

# FIG. 7

UE

BS

Configuration Information related to CSI (710)

RS(e.g., CSI-RS) (720)

Calculate CSI (730)

Report CSI (740)

# FIG. 8

# FIG. 9

*2 indicate-TCI-states*
*maintained by UE (i.e., M=2)*

*{TCI state#1, TCI state#2}*

*{TCI state#3, TCI state#2}*

*{TCI state#3, TCI state#4}*

UE

Network

1st DCI including TCI field set to codepoint A (A05)
*(codepoint A mapped to {TCI state#3, -})*

1st PDSCH (A10)

1st HARQ-ACK for 1st PDSCH (A15)

BAT

T1

2nd DCI including TCI field set to codepoint B (A20)
*(codepoint B mapped to {-, TCI state#4})*

2nd PDSCH (A25)

2nd HARQ-ACK for 2nd PDSCH (A30)

BAT

T2

# FIG. 10

| CC | M | |
| --- | --- | --- |
| | m=0 | m=1 |
| CC1 | s_DL0 | N/A |
| CC2 | s_DL0 | s_DL1 |
| CC3 | s_DL0 | s_DL1 |

# FIG. 11

| CC | M | |
| --- | --- | --- |
| | m=0 | m=1 |
| CC1 | s_DL0 | N/A |
| CC2 | s_DL0 | s_DL1 |
| CC3 | s_DL1 | s_DL0 |

# FIG. 12

```
┌─────────────────────────────┐ B05
│  CC list for simultaneous    │
│  unified TCI update for      │
│  CC group                    │
└─────────────────────────────┘
              │
              ▼
┌─────────────────────────────┐ B10
│  Network signlaing regarding │
│  s_DL(s), sUL(s) for CC group│
└─────────────────────────────┘
              │
              ▼
┌─────────────────────────────┐ B15
│  Association between         │
│  s_DL(s), sUL(s) for CC      │
│  group and Per CC indicated  │
│  TCI states                  │
└─────────────────────────────┘
              │
              ▼
┌─────────────────────────────┐ B20
│  DCI including TCI           │
│  indication in a CC          │
│  in CC group                 │
└─────────────────────────────┘
              │
              ▼
┌─────────────────────────────┐ B25
│  Simultaneous unified TCI    │
│  update for all CCs in       │
│  CC group                    │
└─────────────────────────────┘
```

## FIG. 13

| codepoint of TCI field | S_DL | | S_UL | |
|---|---|---|---|---|
| | s_DL0 | s_DL1 | s_UL0 | s_UL1 |
| 000 | 1st indicated DL TCI state ID = A | 2nd indicated DL TCI state ID = G | 1st indicated UL TCI state ID = B | 2nd indicated UL TCI state ID = F |
| 001 | 1st indicated DL TCI state ID = C | 2nd indicated DL TCI state ID = H | 1st indicated UL TCI state ID = D | 2nd indicated UL TCI state ID = I |
| ... | ... | ... | ... | ... |
| 111 | 1st indicated DL TCI state ID = E | 2nd indicated DL TCI state ID = J | 1st indicated UL TCI state ID = F | 2nd indicated UL TCI state ID = K |

EP 4 668 981 A1

## FIG. 14

| codepoint of TCI field | CC | M | | N | |
|---|---|---|---|---|---|
| | | m=0 | m=1 | n=0 | n=1 |
| 000 | CC1 | 1st indicated DL TCI state ID = A | N/A | 1st indicated UL TCI state ID = B | N/A |
| | CC2 | 1st indicated DL TCI state ID = A | 2nd indicated DL TCI state ID = G | 1st indicated UL TCI state ID = B | N/A |
| | CC3 | 1st indicated DL TCI state ID = A | 2nd indicated DL TCI state ID = G | 1st indicated UL TCI state ID = B | 2nd indicated UL TCI state ID = F |
| 001 | CC1 | 1st indicated DL TCI state ID = C | N/A | 1st indicated UL TCI state ID = D | N/A |
| | CC2 | 1st indicated DL TCI state ID = C | 2nd indicated DL TCI state ID = H | 1st indicated UL TCI state ID = D | N/A |
| | CC3 | 1st indicated DL TCI state ID = C | 2nd indicated DL TCI state ID = H | 1st indicated UL TCI state ID = D | 2nd indicated UL TCI state ID = I |
| ... | ... | ... | ... | ... | ... |
| 111 | CC1 | 1st indicated DL TCI state ID = E | N/A | 1st indicated UL TCI state ID = F | N/A |
| | CC2 | 1st indicated DL TCI state ID = E | 2nd indicated DL TCI state ID = J | 1st indicated UL TCI state ID = F | N/A |
| | CC3 | 1st indicated DL TCI state ID = E | 2nd indicated DL TCI state ID = J | 1st indicated UL TCI state ID = F | 2nd indicated UL TCI state ID = K |

# FIG. 15

| DL TCI state ID | TCI state configuration | | |
|---|---|---|---|
| | CC1 | CC2 | CC3 |
| A | TCI state Config. (i) | TCI state Config. (ii) | TCI state Config. (iii) |
| C | TCI state Config. (iv) | TCI state Config. (v) | TCI state Config. (vi) |

# FIG. 16

```
TCI-State ::=            SEQUENCE {
    tci-StateId             TCI-StateId,
    qcl-Type1               QCL-Info,
    qcl-Type2               QCL-Info
    ...,
    [[
    additionalPCI-r17           AdditionalPCIIndex-r17
    pathlossReferenceRS-Id-r17      PathlossReferenceRS-Id-r17
    ul-powerControl-r17             Uplink-powerControlId-r17
    ]],
    [[
    tag-Id-ptr-r18              ENUMERATED {n0,n1}
    ]]
}

QCL-Info ::=            SEQUENCE {
    cell                   ServCellIndex
    bwp-Id                 BWP-Id
    referenceSignal             CHOICE {
        csi-rs                 NZP-CSI-RS-ResourceId,
        ssb                    SSB-Index
    },
    qcl-Type               ENUMERATED {typeA, typeB, typeC, typeD},
    ...
}
```

# FIG. 17

Receive information regarding CC lists — C05

↓

Receive DCI including TCI information in a first CC — C10

↓

Simultaneously update TCI status of all CCs belonging to first CC group — C15

# FIG. 18

Transmit information regarding CC lists — D05

↓

Transmit DCI including TCI information in a first CC — D10

↓

Simultaneously update TCI status of all CCs belonging to first CC group — D15

# FIG. 19

# FIG. 20

# FIG. 21

Device(100, 200)

| Communication unit (110)<br>(e.g., 5G communication unit) | Control unit (120)<br>(e.g., processor(s)) |
|---|---|
| Communication circuit (112)<br>(e.g., processor(s), memory(s)) | Memory unit (130)<br>(e.g., RAM, storage) |
| Transceiver(s) (114)<br>(e.g., RF unit(s), antenna(s)) | Additional components (140)<br>(e.g., power unit/battery, I/O unit,<br>driving unit, computing unit) |

# FIG. 22

Vehicle or autonomous driving vehicle (100)

Communication unit (110)

Control unit (120)

Memory unit (130)

Driving unit (140a)

Power supply unit (140b)

Sensor unit (140c)

Autonomous driving unit (140d)

108    208

Device (100, 200)

Communication unit (210)

Control unit (220)

Memory unit (230)

Driving unit (140a)

Power supply unit (140b)

Sensor unit (140c)

Autonomous driving unit (140d)

# FIG. 23

## INTERNATIONAL SEARCH REPORT

| International application No. |
|---|
| **PCT/KR2024/001687** |

| A. | CLASSIFICATION OF SUBJECT MATTER |
|---|---|

**H04W 72/232**(2023.01)i; **H04W 72/21**(2023.01)i; **H04W 72/04**(2009.01)i; **H04L 5/00**(2006.01)i; **H04B 7/06**(2006.01)i

According to International Patent Classification (IPC) or to both national classification and IPC

| B. | FIELDS SEARCHED |
|---|---|

Minimum documentation searched (classification system followed by classification symbols)

H04W 72/232(2023.01); H04B 7/06(2006.01); H04L 5/00(2006.01); H04W 16/28(2009.01); H04W 72/04(2009.01); H04W 72/12(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: CC group, CC list, TCI, DCI, simultaneous update, 연계(association), separately, jointly, activated, TCI states, codepoint

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | WO 2023-000300 A1 (LENOVO (BEIJING) LIMITED) 26 January 2023 (2023-01-26)<br>See paragraphs [0010]-[0063]; and claims 1 and 3. | 1-15 |
| Y | US 2023-0022908 A1 (QUALCOMM INCORPORATED) 26 January 2023 (2023-01-26)<br>See paragraph [0084]; and figure 6. | 1-15 |
| Y | WO 2022-144837 A1 (TELEFONAKTIEBOLAGET LM ERICSSON (PUBL)) 07 July 2022<br>(2022-07-07)<br>See claims 1, 4-6 and 9. | 7 |
| A | US 2023-0027281 A1 (APPLE INC.) 26 January 2023 (2023-01-26)<br>See paragraphs [0081]-[0083]; and claims 1-14. | 1-15 |
| A | HUAWEI et al. Discussion on unified TCI framework extension for multi-TRP. R1-2208439, 3GPP TSG-RAN WG1 Meeting #110bis-e, e-Meeting. 30 September 2022.<br>See sections 2.1-2.5.2. | 1-15 |

| ☐ Further documents are listed in the continuation of Box C. | ☑ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **13 May 2024** | **14 May 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/001687**

| Patent document cited in search report | | | Publication date (day/month/year) | Patent family member(s) | | | Publication date (day/month/year) |
|---|---|---|---|---|---|---|---|
| WO | 2023-000300 | A1 | 26 January 2023 | CN | 117581606 | A | 20 February 2024 |
| US | 2023-0022908 | A1 | 26 January 2023 | CN | 114946248 | A | 26 August 2022 |
| | | | | EP | 4094514 | A1 | 30 November 2022 |
| | | | | EP | 4094514 | A4 | 08 November 2023 |
| | | | | WO | 2021-146849 | A1 | 29 July 2021 |
| WO | 2022-144837 | A1 | 07 July 2022 | EP | 4272324 | A1 | 08 November 2023 |
| | | | | US | 2024-0080843 | A1 | 07 March 2024 |
| US | 2023-0027281 | A1 | 26 January 2023 | CN | 115428515 | A | 02 December 2022 |
| | | | | EP | 4133787 | A1 | 15 February 2023 |
| | | | | JP | 2023-520598 | A | 17 May 2023 |
| | | | | KR | 10-2022-0158792 | A | 01 December 2022 |
| | | | | WO | 2021-203296 | A1 | 14 October 2021 |

Form PCT/ISA/210 (patent family annex) (July 2022)